(19) Europäisches Patentamt / European Patent Office / Office européen des brevets

(11) **EP 4 485 334 A1**

(12) **EUROPEAN PATENT APPLICATION**
published in accordance with Art. 153(4) EPC

(43) Date of publication:
**01.01.2025 Bulletin 2025/01**

(21) Application number: **23760053.1**

(22) Date of filing: **22.02.2023**

(51) International Patent Classification (IPC):
**G06Q 50/04** (2012.01)       **C02F 3/12** (2023.01)
**G06Q 10/04** (2023.01)

(52) Cooperative Patent Classification (CPC):
**C02F 3/12; G06Q 10/04; G06Q 50/04;** Y02W 10/10

(86) International application number:
**PCT/JP2023/006508**

(87) International publication number:
**WO 2023/163054 (31.08.2023 Gazette 2023/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.02.2022 JP 2022028556**

(71) Applicants:
• **Sumitomo Chemical Company, Limited**
**Tokyo 103-6020 (JP)**
• **Kataoka Bio Laboratory Co., Ltd.**
**Isehara-shi, Kanagawa 259-1115 (JP)**

(72) Inventors:
• **UCHIDA, Ataru**
**Misawa-shi, Aomori 033-0022 (JP)**
• **IKESHITA, Atsushi**
**Osaka-shi, Osaka 554-8558 (JP)**
• **NAKASUJI IMADA Naoko**
**Osaka-shi, Osaka 554-8558 (JP)**
• **OKUBO HASEGAWA Emi**
**Osaka-shi, Osaka 554-8558 (JP)**

(74) Representative: **J A Kemp LLP**
**80 Turnmill Street**
**London EC1M 5QU (GB)**

(54) **INFORMATION PROCESSING METHOD, INFORMATION PROCESSING DEVICE, PROGRAM, AND WASTEWATER TREATMENT SYSTEM**

(57)     Provided are an information processing method and the like, in which sludge or an effluent in an effluent treatment system using an activated sludge method can be optimized.

The information processing method causes a computer to execute processing of generating a trait model indicating a trait of an effluent treatment system, on the basis of effluent information including information of an effluent in the effluent treatment system using an activated sludge method and bacteria added to the effluent, and sludge information of sludge in the effluent treatment system.

**EP 4 485 334 A1**

# FIG.6

Information processing terminal | Information processing device

Start

S101
Transmit the information of the effluent treatment system

S102
Receive the information of the effluent treatment system

S103
Acquire the effluent information

S104
Acquire the setting of the sludge information

S105
Acquire the actual measurement data

S106
Calculate the parameter

S107
Generate the trait model

S108
Specify the sludge load

S109
Specify the operating condition

S110
Store in DB

S112
Receive the screen including the trait graph and the operating condition

S111
Output the screen including the trait graph and the operating condition

S113
Display the screen

S114
Output the control information

End

## Description

Technical Field

The present invention relates to an information processing method, an information processing device, a program, and an effluent treatment system.

Background Art

As a treatment system for an effluent discharged from a food factory, a chemical plant, or the like, or public sewage water, an effluent treatment system using an activated sludge method has been widely applied. In the effluent treatment system using the activated sludge method, an aeration treatment of supplying oxygen to various types of aerobic microorganisms (activated sludge) in the treatment tank while allowing an effluent that is a treatment target to flow into a treatment tank is performed. An organic pollution material contained in the effluent in the treatment tank is decomposed by the action of the aerobic microorganism, and thus, the effluent is purified. A part of the activated sludge used for the effluent treatment is returned to the treatment tank and used again, but excess sludge that exceeds a reused amount is discharged outside the system and treated.

The amount of organic pollution materials in the effluent greatly varies in accordance with the season and the day. A technology for controlling the operation of the effluent treatment system such that the effluent treatment in the effluent treatment system using the activated sludge method is effectively performed is disclosed (for example, refer to Patent Literature 1).

Citation List

Patent Literature:

Patent Literature 1: Japanese Patent Laid-Open Publication No. 2018-103113

Summary

Technical Problems

However, in an activated sludge treatment device described in Patent Literature 1, the optimization of the sludge or the effluent in the effluent treatment system is not taken into consideration.

An object of the present disclosure is to provide an information processing method and the like in which sludge or an effluent in an effluent treatment system using an activated sludge method can be optimized.

Solution to Problems

An information processing method according to one aspect of the present disclosure causes a computer to execute processing of generating a trait model indicating a trait of an effluent treatment system, on the basis of effluent information including information of an effluent in the effluent treatment system using an activated sludge method and bacteria added to the effluent, and sludge information of sludge in the effluent treatment system.

An information processing device according to one aspect of the present disclosure includes a generation unit generating a trait model indicating a trait of an effluent treatment system, on the basis of effluent information including information of an effluent in the effluent treatment system using an activated sludge method and bacteria added to the effluent, and sludge information of sludge in the effluent treatment system.

A program according to one aspect of the present disclosure causes a computer to execute processing of generating a trait model indicating a trait of an effluent treatment system, on the basis of effluent information including information of an effluent in the effluent treatment system using an activated sludge method and bacteria added to the effluent, and sludge information of sludge in the effluent treatment system.

A program according to one aspect of the present disclosure causes a computer to execute processing of acquiring effluent information including information of an effluent in an effluent treatment system using an activated sludge method and bacteria added to the effluent, and sludge information of sludge in the effluent treatment system, and outputting a parameter of a trait model indicating a trait of the effluent treatment system by inputting the acquired effluent information and sludge information to an estimation model for outputting a parameter of a trait model indicating a trait of an effluent treatment system when effluent information and sludge information in the effluent treatment system are input.

An information processing method according to one aspect of the present disclosure causes a computer to execute processing of acquiring effluent information including information of an effluent in an effluent treatment system using an activated sludge method and bacteria added to the effluent, and sludge information of sludge in the effluent treatment system, and outputting a parameter of a trait model indicating a trait of the effluent treatment system by inputting the acquired effluent information and sludge information to an estimation model for outputting a parameter of a trait model indicating a trait of an effluent treatment system when effluent information and sludge information in the effluent treatment system are input.

An information processing device according to one aspect of the present disclosure includes an acquisition unit acquiring effluent information including information of an effluent in an effluent treatment system using an activated sludge method and bacteria added to the effluent, and sludge information of sludge in the effluent treatment system, and an output unit outputting a parameter of a trait model indicating a trait of the effluent treatment system by inputting the acquired effluent information and sludge information to an estimation model for outputting a parameter of a trait model indicating a trait of an effluent treatment system when effluent information and sludge information in the effluent treatment system are input.

An effluent treatment system according to one aspect of the present disclosure is an effluent treatment system including an effluent treatment device executing an effluent treatment using an activated sludge method, and an information processing terminal controlling the effluent treatment device, in which the information processing terminal outputs effluent information including information of an effluent in the effluent treatment system and bacteria added to the effluent, and sludge information of sludge in the effluent treatment system, acquires an operating condition in the effluent treatment system according to the output effluent information and sludge information, and outputs control information based on the acquired operating condition to the effluent treatment device, and the effluent treatment device executes the effluent treatment in accordance with the control information output from the information processing terminal.

Advantageous Effects of Invention

According to the present disclosure, it is possible to optimize the sludge or the effluent in the effluent treatment system using the activated sludge method. Brief Description of Drawings

FIG. 1 is an outline drawing of an information treatment system according to a first embodiment.
FIG. 2 is a block diagram illustrating a configuration of an information treatment system.
FIG. 3 is a diagram illustrating a record layout of an effluent treatment system DB.
FIG. 4 is a diagram illustrating a record layout of an effluent/sludge information DB.
FIG. 5 is an explanatory diagram illustrating a trait graph.
FIG. 6 is a flowchart illustrating a processing procedure that is executed by an information treatment system.
FIG. 7 is an explanatory diagram illustrating a display example of a screen.
FIG. 8 is an explanatory diagram illustrating a trait graph in a second embodiment.
FIG. 9 is a flowchart illustrating a processing procedure that is executed by an information treatment system of the second embodiment.
FIG. 10 is an explanatory diagram illustrating a trait graph in a third embodiment.
FIG. 11 is a flowchart illustrating a processing procedure that is executed by an information treatment system of the third embodiment.
FIG. 12 is an explanatory diagram illustrating a trait graph in a fourth embodiment.
FIG. 13 is a flowchart illustrating a processing procedure that is executed by an information treatment system of the fourth embodiment.
FIG. 14 is a block diagram illustrating a configuration of an information treatment system of a fifth embodiment.
FIG. 15 is an explanatory diagram illustrating an outline of an estimation model.
FIG. 16 is a flowchart illustrating a processing procedure that is executed by an information treatment system of the fifth embodiment.
FIG. 17 is a flowchart illustrating a processing procedure that is executed by an information treatment system of a sixth embodiment.

Description of Embodiments

Hereinafter, specific examples of an information processing method, an information processing device, a program, and an effluent treatment system according to embodiments of the present invention will be described with reference to the drawings. Note that the present invention is not limited to such examples, but is indicated by the claims, and is intended to include the meaning equivalent to the claims and all modifications within the scope. In addition, some of the embodiments described below may be arbitrarily combined.

The sequences represented in the following embodiments are not limited, and the order of each processing procedure may be changed, or a plurality of pieces of processing may be executed in parallel, unless there is a contradiction. The subject of each piece of processing is not limited, and the processing of each device may be executed by another device, unless there is a contradiction.

(First Embodiment)

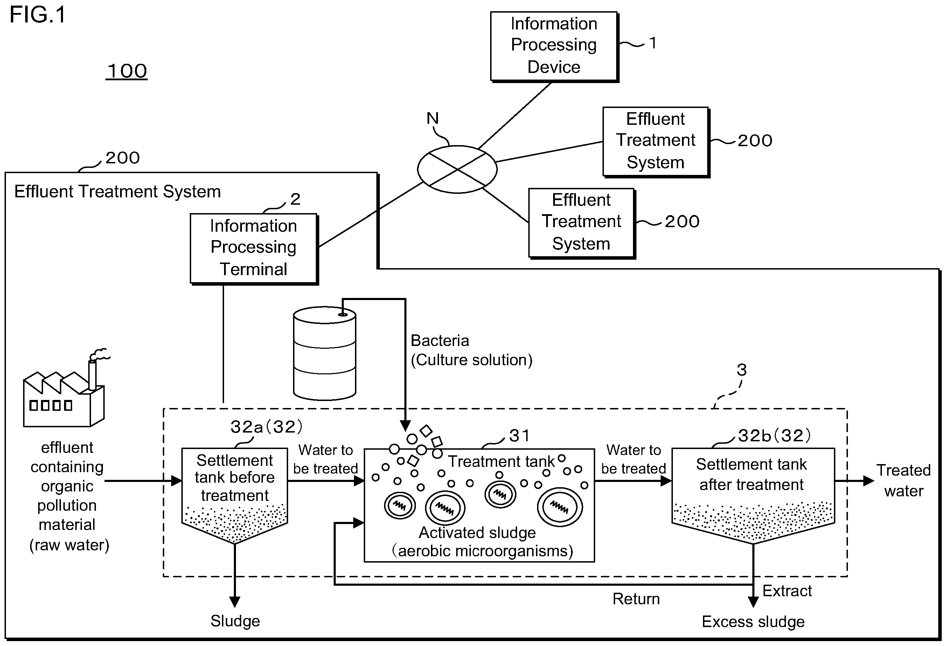

FIG. 1 is an outline drawing of an information treatment system 100 according to a first embodiment. The information treatment system 100 includes an information processing device 1 as a main device. The information processing device 1 is connected to a plurality of effluent treatment systems 200 such that communication is available through a network N such as the internet. Each of the effluent treatment systems 200 includes an information processing terminal 2, and an effluent treatment device 3 executing an effluent treatment using an activated sludge method.

The information processing device 1 is a device that is capable of performing various types of information processing and the reception and transmission of information, and for example, is a server computer, a personal computer, a quantum computer, and the like. The information processing device 1, for example, is managed by a service operator of an effluent treatment system management service provided by the information treatment system 100. The information processing device 1 acquires information relevant to the effluent treatment system 200 of a user (an effluent treatment operator) who uses the effluent treatment system management service, and generates a trait model indicating the trait of the effluent treatment system 200 in accordance with the acquired information. The information processing device 1 provides management information according to the effluent treatment system 200 to the user, on the basis of the generated trait model.

The information processing terminal 2 is the information processing terminal 2 that the user uses, and for example, is a personal computer, a smart phone, a tablet terminal, and the like. The information processing terminal 2, for example, is a local computer provided in a factory including the effluent treatment device 3. The information processing terminal 2 transmits various types of information relevant to the effluent treatment system 200 to the information processing device 1, and receives the management information according to the effluent treatment system 200 from the information processing device 1. The information processing terminal 2 may have a function as a control device for controlling the operation of the effluent treatment device 3. Alternatively, the control device controlling the operation of the effluent treatment device 3 is provided as a device distinct from the information processing terminal 2, and the information processing terminal 2 may communicate with the control device through a communication unit or the like to execute the reception and transmission of various types of information through the control device and control the operation. The information processing device 1 may be connected to a plurality of information processing terminals 2 respectively corresponding to a plurality of users who use the effluent treatment system management service such that communication is available. Note that the information processing device 1 and the information processing terminal 2 are not limited to being devices distinct from each other, and may be one common information processing device. The information processing device 1 may be provided in a factory including the effluent treatment device 3.

The effluent treatment device 3 includes a treatment device for treating an effluent discharged from a factory. The effluent treatment system 200 performs an effluent treatment by using activated sludge (hereinafter, also simply referred to as sludge) that is a composite microbial system including bacteria or protozoans, metazoans, and the like. In the effluent treatment system 200, various bacteria are added in a treatment step in order to solve the problem of the excess sludge described below. Note that a treatment target of the effluent treatment system 200 is not limited to the factory effluent, and for example, the effluent treatment system may be a treatment system for treating public sewage water.

The effluent treatment device 3, for example, includes a treatment tank 31, a settlement tank 32a before treatment, and a settlement tank 32b after treatment. In the following description, in a case where it is not necessary to distinguish the settlement tank 32a before treatment and the settlement tank 32b after treatment from each other, the settlement tank before treatment and the settlement tank will also be simply referred to as a settlement tank 32. Note that the configuration of the effluent treatment device 3 is an example, and is not limited. In FIG. 1, the effluent treatment device 3 including one treatment tank 31 is illustrated, but the treatment tank 31 may be configured in a plurality of stages. The settlement tank 32a before treatment may be omitted. In addition, in the effluent treatment device 3, a pretreatment tank, which is not illustrated, may be provided before the treatment tank 31.

The settlement tank 32a before treatment is a tank into which an effluent containing an organic pollution material (hereinafter, also referred to as raw water) flows. In the settlement tank 32a before treatment, the raw water slowly flows such that waste and the like with comparative small particles are settled. Water to be treated that is treated by the settlement tank 32a before treatment is supplied to the treatment tank 31 through a water supply line. A constant amount of the water to be treated may be continuously supplied to the treatment tank 31.

The treatment tank 31 includes an aeration means, which is not illustrated, in which the water to be treated that is supplied from the settlement tank 32a before treatment is subjected to an aerobic treatment by the sludge existing in the treatment tank 31. A culture solution containing various bacteria is added to the treatment tank 31. The culture solution, for example, is retained in a tank, and is continuously added to the treatment tank 31 by using a pump in a predetermined amount. Note that the form of the bacteria is not limited to liquid, but may be a powder, a drug formulation, or the like. In addition, a mode in which the bacteria are added is not limited, and the bacteria may be suitably added in the system of the effluent treatment device 3. For example, the bacteria may be added in the settlement tank 32b after treatment or the water supply line, or in a case where the effluent treatment device 3 includes a pretreatment tank, which is not illustrated, the bacteria may be added in the pretreatment tank.

The treatment tank 31 aerates the retained sludge by performing air diffusion in the treatment tank 31 using a gas such as the air or oxygen that is supplied by a blower, which is not illustrated. An aerobic microorganism containing the bacteria in the sludge extracts dissolved oxygen from water, and oxidatively decomposes the organic pollution material in the water to be treated that is incorporated as food. The water to be treated that is treated by the treatment tank 31 is supplied to the settlement tank 32b after treatment through the water supply line.

In the settlement tank 32b after treatment, the water to be treated that is supplied from the treatment tank 31 is left to stand for a predetermined time such that the sludge is naturally deposited. Accordingly, the water to be treated is subjected to solid-liquid separation into a supernatant solution and the sludge. The supernatant solution is discharged as the final treated water. A part of the deposited sludge is returned to the treatment tank 31 and is circularly used. The residue of the sludge is extracted outside the system, is subjected to dewatering, drying, or the like, and then, is disposed by incineration, or is treated to be recycled as a soil conditioner, a civil engineering and construction material, or the like. In this specification, the sludge indicates sludge that is extracted outside the system without being circularly used, in the sludge in the effluent treatment system 200. Note that the settlement tank 32b after treatment is not limited to a settlement tank type, and for example, may be a membrane separation device or the like.

In the treatment tank 31 and the settlement tank 32b after treatment, various measuring instruments measuring the state of the effluent or the sludge in each of the tanks are provided.

In the measuring instrument provided in the treatment tank 31, for example, a thermometer, a pH meter, an ORP meter, a DO analyzer, a MLSS analyzer, a TOC analyzer, and the like are included. The thermometer is a measuring instrument measuring the temperature in the treatment tank 31. The pH meter is a measuring instrument measuring the pH of the water to be treated in the treatment tank 31. The ORP meter is a measuring instrument measuring the oxidation reduction potential (ORP) of the water to be treated in the treatment tank 31. The DO analyzer is a measuring instrument measuring the dissolved oxygen (DO) concentration of the water to be treated in the treatment tank 31. The MLSS analyzer is a measuring instrument measuring the mixed liquor suspended solids (MLSS) concentration of the treated water in the treatment tank 31. The TOC analyzer is a measuring instrument measuring the total organic carbon (TOC) of the water to be treated in the treatment tank 31. The TOC indicates the amount of carbon in the organic pollution material existing in the treated water in the treatment tank 31, and is an index of the level of the organic pollution material in the treated water.

In addition, in the treatment tank 31, a measuring instrument measuring the state of the water to be treated that flows into the treatment tank 31 is provided. In the measuring instrument measuring the state of the water to be treated, for example, a flowmeter, a thermometer, a pH meter, a nitrogen analyzer, a phosphorus analyzer, and the like are included. The flowmeter is a measuring instrument measuring the flow rate of the water to be treated. The thermometer is a measuring instrument measuring the temperature of the water to be treated. The pH meter is a measuring instrument measuring the pH of the water to be treated. The nitrogen analyzer is a measuring instrument measuring the nitrogen concentration in the water to be treated. The phosphorus analyzer is a measuring instrument measuring the phosphorus concentration in the water to be treated. Such measuring instruments may be provided in the water supply line connected to the treatment tank 31.

In a measuring instrument provided in the settlement tank 32b after treatment, for example, a flowmeter, an interface analyzer, a MLSS analyzer, and the like are included. The flowmeter is a measuring instrument measuring the return flow rate in the settlement tank 32b after treatment. The flowmeter may measure the extraction amount of the excess sludge in the settlement tank 32b after treatment. The interface analyzer is a measuring instrument measuring the solid-liquid interface position of the settlement tank 32b after treatment. The MLSS analyzer is a measuring instrument measuring the MLSS concentration of the treated water in the settlement tank 32b after treatment.

As described above, in the sludge generated in the settlement tank 32b after treatment, the excess sludge that is not returned to the treatment tank 31 is disposed by incineration. It takes time and effort and a cost to treat the excess sludge. By solving problems relevant to the state of the excess sludge to optimize the state of the excess sludge, it is possible to reduce the time and effort and the cost required for the treatment of the excess sludge. In this embodiment, the problems relevant to the state of the excess sludge is the amount of excess sludge, and by reducing the amount of excess sludge, the time and effort and the cost required for the treatment of the excess sludge are reduced.

As a method for solving the problems relevant to the state of the excess sludge, in the effluent treatment system 200, the addition of the bacteria is used. By adding the bacteria that act on the state of the excess sludge to the effluent in the effluent treatment system 200, it is possible to preferably change the state of the excess sludge.

The bacteria added to the effluent treatment system 200 include sludge decomposition bacteria. The sludge decomposition bacteria indicate bacteria having decomposition capability with respect to the sludge that can be the excess sludge. The bacteria may be classified into a plurality of types, in accordance with the types of bacteria combined. For example, the bacteria are classified into a plurality of types of sludge decomposition bacteria X1, sludge decomposition bacteria X2, and the like. By adding the sludge decomposition bacteria to the effluent, it is possible to reduce the generation rate of the excess sludge, and suppress the generation of the excess sludge (reduce the excess sludge).

In this embodiment, an example will be described in which the sludge decomposition bacteria are added to the effluent treatment system 200, but the bacteria that can be added to the effluent treatment system 200 are not limited to the sludge decomposition bacteria. A plurality of bacteria may be prepared in accordance with the problems relevant to the state of the sludge or the effluent, and may be suitably and selectively added. Only one type of the bacteria may be used alone, or two or more types thereof may be used in combination.

In the related art, in the effluent treatment system 200 using such bacteria, it is difficult to evaluate an effect by the addition of the bacteria, and the adjustment of various conditions relevant to the addition of the bacteria depends on the experience or the intuition of the operator. In this information treatment system 100, the trait model capable of quantitatively evaluating the effect by the addition of the bacteria as described above with respect to the state of the sludge or the effluent is generated. The effect by the addition of the bacteria is quantitatively evaluated by using the generated trait model, and the operating condition of the effluent treatment system 200 in which the effect by the addition of the bacteria can be preferably exhibited is specified on the basis of an evaluation result and is provided to the user.

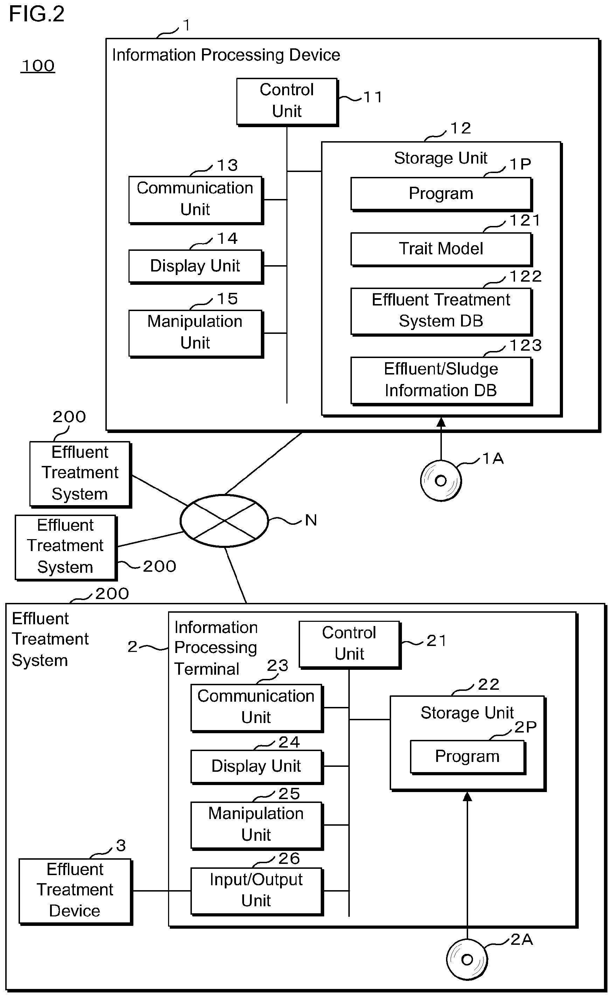

FIG. 2 is a block diagram illustrating the configuration of the information treatment system 100. The information processing device 1 includes a control unit 11, a storage unit 12, a communication unit 13, a display unit 14, a manipulation unit 15, and the like. The information processing device 1 may be a multicomputer consisting of a plurality of computers, or may be a virtual machine virtually constructed by software.

The control unit 11 is an arithmetic processing device including a central processing unit (CPU), a graphics processing unit (GPU), and the like. The control unit 11 uses a built-in memory such as a read only memory (ROM) or a random access memory (RAM), executes various computer programs stored in the ROM or the storage unit 12, and controls the operation of each hardware unit described above. The control unit 11 may have the functions of a timer measuring the elapsed time from when a measurement start instruction is applied to when a measurement end instruction is applied, a counter counting the number, a clock outputting date and time information, and the like.

The storage unit 12 includes a non-volatile storage device such as a hard disk or a solid state drive (SSD). In the storage unit 12, various computer programs and data are stored. The storage unit 12 may be configured by a plurality of storage devices, or may be an external storage device connected to the information processing device 1. In the computer program stored in the storage unit 12, a program 1P for causing a computer to execute processing relevant to the generation of the trait model is included.

In the data stored in the storage unit 12, a trait model 121 is included. The trait model 121 is the trait model indicating the trait of the effluent treatment system 200. The trait of the effluent treatment system 200 may be a trait according to the excess sludge of the effluent treatment system 200. The trait model 121, for example, is defined by a model formula, an approximate line, or the like. The trait model 121 includes a parameter according to each trait. The trait model 121 may be stored as a basic model formula in which parameters are undefined, and the parameters may be suitably determined for each user. The details of the trait model 121 will be described below.

In addition, in the storage unit 12, an effluent treatment system database (DB) 122 and an effluent/sludge information DB 123 are stored.

The computer program (a computer program product) stored in the storage unit 12 may be provided by a non-transitory recording medium 1A in which the computer program is readably recorded. The recording medium 1A is a portable memory such as a CD-ROM, a USB memory, and a secure digital (SD) card. The control unit 11 reads a desired computer program from the recording medium 1A by using a read device, which is not illustrated, and stores the read computer program in the storage unit 12. Alternatively, the computer program may be provided by communication. The program 1P can be disposed on a single computer or one site, or can be dispersed over a plurality of sites, and decompressed to be executed on a plurality of computers connected to each other by a communication network.

The communication unit 13 includes a communication device for performing processing relevant to communication through a network N. The control unit 11 performs the reception and transmission of various types of information with respect to the information processing terminal 2 through the communication unit 13.

The display unit 14 includes a display device such as a liquid crystal panel and an organic electro luminescence (EL) display. The display unit 14 displays various types of information, in accordance with an instruction from the control unit 11.

The manipulation unit 15 is an interface receiving the manipulation of the user, and for example, includes a keyboard, a touch panel device with a built-in display, a speaker, a microphone, and the like. The manipulation unit 15 receives the manipulation input from the user, and transmits a control signal according to the manipulation contents to the control unit 11.

The information processing terminal 2 includes a control unit 21, a storage unit 22, a communication unit 23, a display unit 24, a manipulation unit 25, an input/output unit 26, and the like.

The control unit 21 is an arithmetic processing device including a CPU, a GPU, and the like. The control unit 11 uses a built-in memory such as a ROM or a RAM, executes various computer programs stored in the ROM or the storage unit 22, and controls each hardware unit described above to execute processing of acquiring control information in the effluent treatment system 200.

The storage unit 22 includes a non-volatile storage device such as a hard disk or an SSD. In the storage unit 22, various computer programs and data are stored. In the computer program stored in the storage unit 22, a program 2P for causing a computer to execute processing relevant to the acquisition of the operating condition in the effluent treatment system 200 is included.

The computer program (a computer program product) stored in the storage unit 22 may be provided by a non-transitory recording medium 2A in which the computer program is readably recorded. The recording medium 2A is a portable memory such as a CD-ROM, a USB memory, and an SD card. The control unit 21 reads a desired computer program from the recording medium 2A by using a read device, which is not illustrated, and stores the read computer program in the storage unit 22. Alternatively, the computer program may be provided by communication. The program 2P can be disposed on a single computer or one site, or can be dispersed over a plurality of sites, and decompressed to be executed on a plurality of computers connected to each other by a communication network.

The communication unit 23 includes a communication device for performing processing relevant to the communication through a network N. The control unit 21 performs the reception and transmission of various types of information with respect to the information processing device 1 through the communication unit 23.

The display unit 24 includes a display device such as a liquid crystal panel and an organic EL display. The display unit 24 displays various types of information, in accordance with an instruction from the control unit 21.

The manipulation unit 25 is an interface receiving the manipulation of the user, and for example, includes a keyboard, a touch panel device with a built-in display, a speaker, a microphone, and the like. The manipulation unit 25 receives the manipulation input from the user, and transmits a control signal according to the manipulation contents to the control unit 21.

The input/output unit 26 is an input/output interface (I/F) for a connection to an external device. The effluent treatment device 3 including various sensors described above is connected to the input/output unit 26. The control unit 21 receives various types of data output from the effluent treatment device 3, and outputs the control information for controlling the operation of the effluent treatment device 3 to the effluent treatment device 3, through the input/output unit 26.

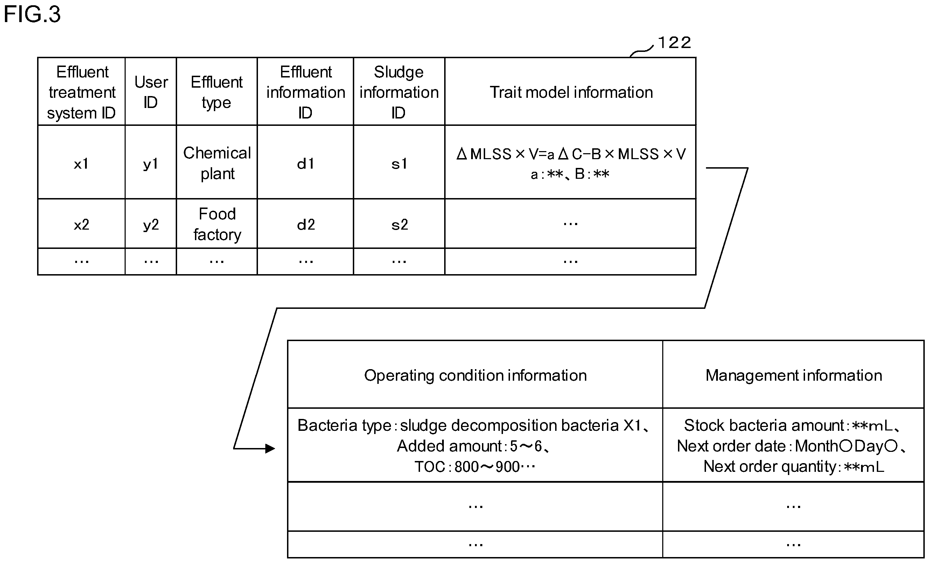

FIG. 3 is a diagram illustrating the record layout of the effluent treatment system DB 122. The effluent treatment system DB 122 is a database in which information relevant to the effluent treatment system 200 managed by the effluent treatment system management service is stored. In the effluent treatment system DB 122, for example, an effluent treatment system ID, a user ID, an effluent type, an effluent information ID, a sludge information ID, trait model information, operating condition information, management information, and the like are stored in association with each other.

The effluent treatment system ID is the identification information of the effluent treatment system 200. The user ID is the identification information of the user of the effluent treatment system 200. The effluent type is the type of effluent to be the treatment target of the effluent treatment system, for example, includes a chemical plant, a food factory, and the like. The effluent information ID is the identification information of effluent information received from the effluent treatment system 200. The sludge information ID is the identification information of sludge information received from the effluent treatment system 200. The trait model information is information relevant to the trait model generated on the basis of the effluent information and the sludge information. The trait model information, for example, includes a model formula, and the values of specified parameters.

The operating condition information includes information relevant to the operating condition of the effluent treatment system 200 that is specified in accordance with the trait model. In the operating condition, various manipulation contents and control amounts (set values) according to the operation of the effluent treatment system 200 are included. In addition, in the operating condition, information relevant to the bacteria added to the effluent treatment system 200 (for example, the type and the added amount of the bacteria) is included. In the operating condition information, for example, the control amount such as the type of bacteria added, the added amount of the bacteria, the BOD and the TOC of the effluent in the effluent treatment system 200, the flow rate of the effluent, the sludge concentration MLSS of the treatment tank 31, the return flow rate to the treatment tank 31, the extraction amount of the excess sludge, and the interface position of the settlement tank 32b after treatment, and the like are stored.

The management information includes information for managing the effluent treatment system 200. For example, in the management information, information for managing the bacteria in the effluent treatment system 200 is stored. In the example illustrated in FIG. 3, in the management information, the amount of stock of the bacteria, the next order date, and an order quantity are included.

Each time when the trait model, the operating condition information, and the management information are derived on the basis of the effluent information and the sludge information received from the information processing terminal 2, the information processing device 1 stores the various types of derived information in the effluent treatment system DB 122.

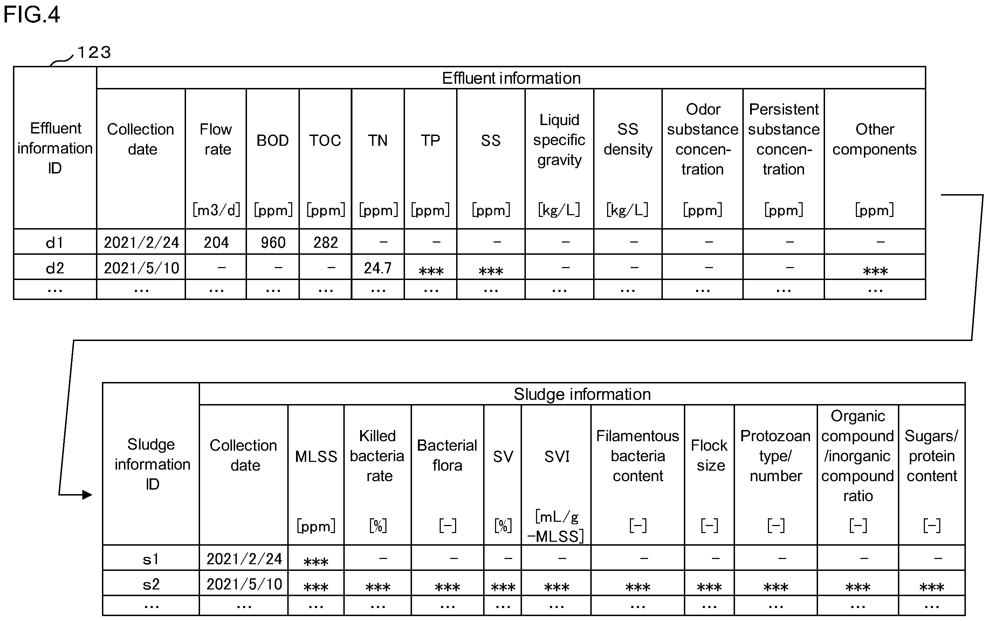

FIG. 4 is a diagram illustrating the record layout of the effluent/sludge information DB 123. The effluent/sludge information DB 123 is a database in which the effluent information and the sludge information of the effluent treatment system 200 are stored. In the effluent/sludge information DB 123, for example, the effluent information ID for identifying the effluent information, the effluent information, the sludge information ID for identifying the sludge information, the sludge information, and the like are stored in association with each other. Note that the effluent treatment system DB 122 and the effluent/sludge information DB 123 are associated with each other by the effluent information ID and the sludge information ID which are items included in both of the databases.

The effluent information is information relevant to the effluent in the effluent treatment system 200, and includes the information relevant to the bacteria added to the effluent. In the effluent information, for example, the collection date, the flow rate, the BOD, the TOC, the total nitrogen (TN), the total phosphorus (TP), the suspended solids (SS), the liquid specific gravity, the SS density, the odor substance concentration, and the persistent substance concentration of the effluent, each of other components, and the like may be included. Each of the other components includes information relevant to each of the other components in the effluent, and for example, may include the concentration (the amount) of a solid content and/or a total solid content in the effluent, the concentration of each component of an organic compound and/or an inorganic compound in the effluent, and the like. Examples of each component of the organic compound and/or the inorganic compound in the effluent include a salt (for example, sodium chloride, magnesium sulfate, calcium sulfate, a hydrogencarbonate, and the like), alcohol (for example, methanol, ethanol, and the like), an organic acid, a fatty acid, sugars, a protein, and the like.

The sludge information is information relevant to the sludge (the activated sludge) in the effluent treatment system 200. In the sludge information, for example, the collection date, the MLSS, the killed bacteria rate, the oxygen consumption rate (for example, an oxygen consumption rate during endogenous respiration, an oxygen consumption rate for BOD decomposition, and the like), the bacterial flora, the sludge volume (SV), the sludge volume index (SVI), the content of the filamentous bacteria, the flock size, the type and the number of protozoans, and the organic compound/inorganic compound ratio of the sludge, the concentration of each component of an organic compound and/or an inorganic compound in the sludge, and the like may be included. Examples of each component of the organic compound and/or the inorganic compound in the sludge include sugars, a protein, a lipid, and the like.

The effluent information and the sludge information described above can be acquired as the measured values of various sensors in the effluent treatment system 200 and the set values of the operating condition, and analysis data thereof. Note that a measurement method and a calculation method of each piece of data are known, and thus, in this specification, further detailed description will be omitted. The information processing device 1 receives the effluent information and the sludge information through the information processing terminal 2 to collect the effluent information and the sludge information of the effluent/sludge information DB 123. The effluent information and the sludge information illustrated in FIG. 4 are an example, and the information stored in the effluent/sludge information DB 123 is not limited. Data according to a suitable item is stored in each of the effluent information and the sludge information, in accordance with the trait model described below, and the generation method thereof.

Hereinafter, the trait model of this embodiment, and the generation method thereof will be described. Hereinafter, a trait model indicating the sludge extraction rate of the effluent treatment system 200, in a case where the sludge decomposition bacteria are added to the effluent treatment system 200 as the bacteria, will be described.

In a case where the sludge decomposition bacteria are not added, the amount of excess sludge generated (a change in the amount of excess sludge) in the effluent treatment system 200 is obtained by subtracting the decomposed amount of the sludge from the amount of sludge generated (the increased amount) in the effluent treatment system 200. That is, the amount of excess sludge generated $\Delta MLSS \times V$ [kg/d] in the effluent treatment system 200 can be represented by Expression (1) described below using parameters a and b.

[Expression 1]

$$\Delta MLSS \times V = a\Delta C - b \times MLSS \times V \ldots (1)$$

In Expression (1), MLSS is the sludge concentration [kg/m$^3$] of the treatment tank 31, V is the volume [m$^3$] of the treatment tank 31, and $\Delta C$ is the amount [kg/d] of treated carbon in the treatment tank 31. a is a sludge conversion rate, and represents the amount of excess sludge generated with respect to the amount of organic pollution materials treated by the effluent treatment system 200. b is a sludge self-oxidation rate [1/d].

In a case where the sludge decomposition bacteria are added to the treatment tank 31, the decomposed amount of the sludge in the treatment tank 31 is further increased (changed) in accordance with the addition of the sludge decomposition bacteria. Here, as a new parameter, a sludge decomposition rate B [1/d] representing the effect by the addition of the sludge decomposition bacteria is introduced. The sludge decomposition rate B corresponds to the sludge self-oxidation rate of the treatment tank 31 to which the effect by the addition of the sludge decomposition bacteria is added.

The amount of excess sludge generated ΔMLSS × V [kg] of the treatment tank 31, in a case where the sludge decomposition bacteria are added to the treatment tank 31, can be represented by Expression (2) described below using parameters a and B.

[Expression 2]

$$\Delta MLSS \times V = a\Delta C - B \times MLSS \times V \ ...(2)$$

In Expression (2), MLSS is the sludge concentration [kg/m³] of the treatment tank 31, V is the volume [m³] of the treatment tank 31, and ΔC is the amount [kg/d] of treated carbon in the treatment tank 31. a is a sludge conversion rate, and B is a sludge decomposition rate [1/d].

Accordingly, in a case where the sludge conversion rate a and the sludge decomposition rate B are set, the amount of excess sludge generated can be calculated by using the trait model represented by Expression (2).

Here, in a case where Expression (2) is modified, Expression (3) described below is obtained.

[Expression 3]

$$\frac{\Delta MLSS \times V}{\Delta C} = a - B \times \frac{1}{\frac{\Delta C}{MLSS \times V}} \ ...(3)$$

In Expression (3), ΔMLSS × V/ΔC indicates a sludge increased amount per treated carbon, that is, the sludge extraction rate, and ΔC/MLSS × V indicates a load per the sludge of the treatment tank 31. In a case where the sludge conversion rate a and the sludge decomposition rate B are set, the sludge extraction rate can be calculated by using the trait model represented by Expression (3).

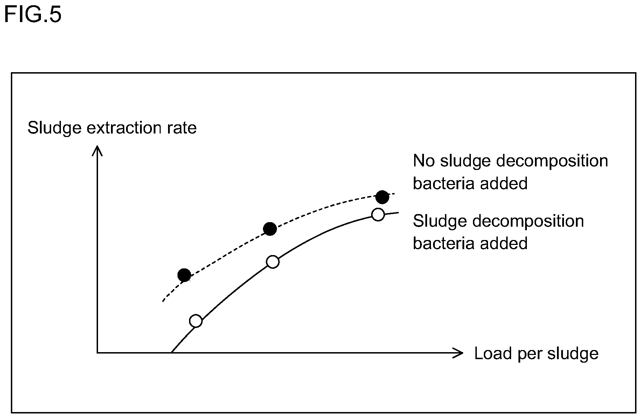

FIG. 5 is an explanatory diagram illustrating a trait graph. In FIG. 5, the trait graph of Expression (3) is indicated by a solid line. In the trait graph, the vertical axis is the sludge extraction rate, and the horizontal axis is the load per the sludge of the treatment tank 31. For comparison, a trait graph in a case where the sludge decomposition bacteria are not added is indicated by a broken line. In a case where the sludge decomposition bacteria are added, the trait graph is moved to a direction in which the sludge extraction rate decreases, compared to a case where the sludge decomposition bacteria are not added. The decreased amount of the sludge extraction rate corresponds to the effect by the addition of the sludge decomposition bacteria. Note that the trait graph illustrated in FIG. 5 is merely an example.

From Expression (3) and FIG. 5, it is found that the sludge reduction effect (a reduction ratio in the sludge extraction rate) by the addition of the bacteria increases as the load per the sludge (a sludge load) decreases. Accordingly, the operating condition of the effluent treatment system 200 is controlled on the basis of a correlative relationship between the sludge extraction rate and the sludge load indicated by the trait model such that the sludge load is decreased, and thus, the sludge extraction rate can be decreased (the effect by the addition of the bacteria can be obtained).

As described above, the trait model indicating a change in the sludge extraction rate with respect to the sludge load can be represented by using the sludge conversion rate a and the sludge decomposition rate B. The sludge conversion rate a and the sludge decomposition rate B in the trait model can be calculated on the basis of experimental data of the effluent information and the sludge information in the effluent treatment system 200. Hereinafter, an example of a calculation method of the parameter will be described.

The information processing device 1 calculates the sludge conversion rate a and the sludge decomposition rate B by performing the fitting calculation of the trait model, on the basis of different sludge loads at a plurality of points obtained on the basis of the actual measurement data in the effluent treatment system 200, and a sludge residence time with respect to each of the sludge loads. The actual measurement data may be obtained in the actual effluent treatment system 200, or may be obtained by a laboratory experiment in which the actual system is scaled down.

First, the effluent information in the effluent treatment system 200 is acquired. In the acquired effluent information, for example, the flow rate of the effluent, and the BOD or the TOC of the effluent are included. In addition, the setting information of the type and the added amount of the bacteria added to the effluent (in this embodiment, the sludge decomposition bacteria) is acquired. Further, as the sludge information, the setting information of different sludge concentration MLSS at a plurality of points is acquired. The setting of the sludge concentration MLSS corresponds to the setting of the sludge load. The sludge load is obtained by dividing a value obtained by multiplying the BOD or the TOC of the effluent and the flow rate by the sludge concentration MLSS of the treatment tank 31. In a case where the BOD or the TOC and the flow rate in the effluent treatment system 200 are constant, by changing the sludge concentration MLSS of the treatment tank 31, it is possible to set different sludge loads at a plurality of points.

Under the set condition for adding the bacteria, the effluent treatment is executed by the effluent treatment system 200 to obtain each of the sludge loads, and the actual measurement data during the treatment is collected. In the collected actual measurement data, for example, the flow rate of the effluent, the BOD or the TOC of the effluent, the sludge increased amount (the sludge extraction amount), the sludge concentration MLSS of the treatment tank 31, the sludge density, the sludge volume in the settlement tank 32b after treatment, and the like are included. The sludge residence time with respect to each of the sludge loads is calculated on the basis of the obtained actual measurement data. As a measurement method of each piece of the actual measurement data and a calculation method of the sludge residence time, known methods may be used.

The sludge conversion rate a and the sludge decomposition rate B are calculated by performing the fitting calculation of Expression (3) described above, on the basis of the sludge residence time with respect to each of the sludge loads. As described above, it is possible to generate the trait model including the sludge conversion rate a and the sludge decomposition rate B according to the effluent information and the sludge information.

In the above description, the trait model is generated by using the effluent information and the sludge information, but only the effluent information may be used to generate the trait model, in accordance with the defined contents of the trait model. In addition, the trait graph generated on the basis of the trait model of Expression (2) is not limited to indicating a change in the sludge extraction rate with respect to the load per the sludge, but may indicate a change in the sludge generation rate with respect to the load per the sludge.

Further, the information processing device 1 specifies the operating condition in which the trait of the effluent treatment system 200 satisfies a predetermined condition by using the generated trait model. Specifically, the information processing device 1 specifies the sludge load at which the trait of the effluent treatment system 200 satisfies the predetermined condition, on the basis of the generated trait model. The information processing device 1 specifies an operating condition for satisfying the specified sludge load, on the basis of information stored in an operating condition table in which the specified sludge load, and the operating condition for specifying the specified sludge load (the manipulation contents of the operating condition, the control amount of each manipulation variable for satisfying the manipulation contents, and the like) are associated with each other.

Specifically, the information processing device 1 specifies the threshold value (the range of the threshold value) of the sludge load of the effluent treatment system 200, for decreasing the sludge extraction rate or the sludge generation rate of the effluent treatment system 200 to a predetermined value. The information processing device 1 specifies an operating condition for decreasing the sludge load to the specified threshold value (to be in the range of the threshold value).

Examples of the operating condition for decreasing the sludge load of the effluent treatment system 200 include increasing the amount of sludge retained in the system, decreasing the BOD or the TOC of the effluent, decreasing the amount of treated effluent, and the like. The information processing device 1 suitably selects the operating condition according to the effluent treatment system 200, and derives the control amount according to the selected operating condition. For example, in the case of increasing the amount of sludge retained in the system, the sludge concentration MLSS may be increased. The information processing device 1 derives the control amount (the set value) such as the return flow rate, the amount of extracted sludge, and the interface position of the settlement tank 32b after treatment, on the basis of a target value of the sludge concentration MLSS determined in accordance with the threshold value of the sludge load.

The lower limit value of the sludge load for specifying the operating condition may be set in accordance with the constraint condition in the effluent treatment system 200. In the constraint condition, for example, the blower capability in the treatment tank 31 is included. Since the upper limit value of the sludge concentration MLSS is changed in accordance with the upper limit of the blower capability, the lower limit value of the sludge load is set in accordance with the upper limit value of the sludge concentration MLSS.

The information processing device 1 stores in advance a specific rule for specifying the operating condition according to the trait model and the constraint condition of the effluent treatment system 200 in the storage unit 12, and specifies the operating condition of the effluent treatment system 200 by using the generated trait model.

The information processing device 1 may further specify the type and the added amount of the bacteria added, as the operating condition. In this case, when generating the trait model, the actual measurement data is acquired by changing the type and the added amount of the bacteria added, in addition to the sludge load. The type and the added amount of the bacteria are specified by selecting the type and the added amount of the bacteria capable of further decreasing the sludge extraction rate or the sludge generation rate, on the basis of the actual measurement data, and applying the trait model in the case of using the type and the added amount of the bacteria. Note that as the operating condition, either the type or the added amount of the bacteria may be specified.

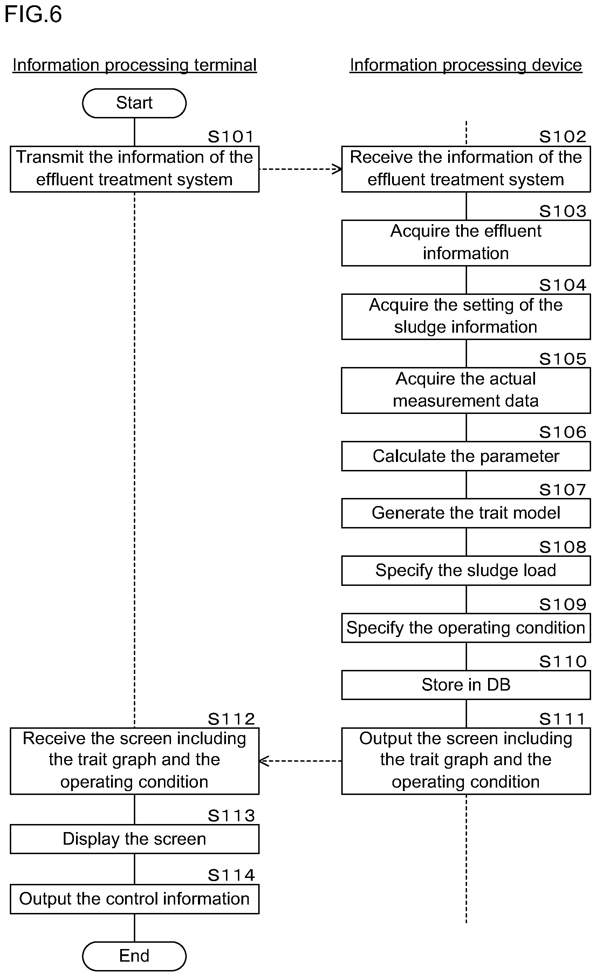

FIG. 6 is a flowchart illustrating a processing procedure that is executed by the information treatment system 100. The following processing is executed by the control unit 11 in accordance with the program 1P stored in the storage unit 12 of the information processing device 1, and is executed by the control unit 21 in accordance with the program 2P stored in the storage unit 22 of the information processing terminal 2.

The control unit 21 of the information processing terminal 2 transmits the information of the effluent treatment system 200 to the information processing device 1 at the request of the operating condition (step S101). In the information of the effluent treatment system 200, for example, an equipment configuration such as a tank configuration according to the effluent treatment system 200 connected to the information processing terminal 2, operation information such as the set value in each tank, the effluent treatment system ID, and the like are included.

The control unit 11 of the information processing device 1 receives the information of the effluent treatment system 200 (step S102). Note that the control unit 11 may receive the input through the manipulation unit 15 to acquire the information of the effluent treatment system 200.

In addition, the control unit 11 acquires the effluent information (step S103). In the effluent information, for example, the flow rate of the effluent, the BOD or the TOC of the effluent, and the type and the added amount of the bacteria are included. The control unit 11, for example, may receive the input through the manipulation unit 15 to acquire the effluent information obtained by analyzing the actual effluent and the sludge in the effluent treatment system 200 of the user. The control unit 11 further receives the input of the setting information of the type and the added amount of the bacteria added to the effluent to acquire the type and the added amount of the bacteria. The control unit 11 may acquire effluent information by communication with a server of an experiment facility, or the like.

The control unit 11 acquires the setting of the sludge information (step S104). The control unit 11 may receive the setting input of different sludge concentration MLSS at the plurality of points to acquire the sludge information. The control unit 11 may acquire the actual measurement data described below to acquire the setting of the sludge information.

The control unit 11 acquires the actual measurement data according to the acquired effluent information and sludge information (step S105). The control unit 11 may receive the input of the actual measurement data in the laboratory experiment to acquire the actual measurement data.

The control unit 11 calculates the parameter in the trait model by using the acquired actual measurement data (step S106), and generates the trait model including the calculated parameter (step S107). Specifically, the control unit 11 calculates the sludge conversion rate a and the sludge decomposition rate B, as the parameter, by performing the fitting calculation of Expression (3) that is the basic model formula described above, on the basis of the sludge residence time with respect to each of the plurality of sludge loads. The control unit 11 generates the trait model indicating a change in the sludge extraction rate with respect to the sludge load, including the sludge conversion rate a and the sludge decomposition rate B. The control unit 11 may generate the trait model indicating a change in the sludge generation rate with respect to the sludge load.

The control unit 11 specifies the sludge load at which the sludge extraction rate or the sludge generation rate of the effluent treatment system 200 satisfies a predetermined condition by using the generated trait model (step S108). Specifically, the control unit 11 specifies the threshold value of the sludge load at which the sludge extraction rate or the sludge generation rate is less than the threshold value set in advance, on the basis of the trait model. The control unit 11 specifies the operating condition in which the sludge load of the effluent treatment system 200 is less than the specified threshold value (step S109).

The control unit 11 stores the effluent information, the sludge information, the trait model, and the operating condition in the effluent treatment system DB 122 and the effluent/sludge information DB 123, respectively (step S110).

The control unit 11 generates a screen including the trait graph indicating the generated trait model, and the specified operating condition, and outputs the screen including the generated trait graph and the operating condition to the information processing terminal 2 corresponding to the user of the effluent treatment system 200 (step S 111).

The control unit 21 of the information processing terminal 2 receives the screen including the trait graph and the operating condition (step S112). The control unit 21 displays the received screen on the display unit 24 (step S113), and presents the screen to the user.

The control unit 21 outputs the control information for changing the operating condition to the effluent treatment device 3, on the basis of the received operating condition (step S114), and ends a series of processing. The effluent treatment device 3 performs an operation in accordance with the control information to execute the effluent treatment.

The subject of each piece of processing in the flowchart described above is not limited, and for example, a part of the processing executed by the information processing device 1 may be executed by the information processing terminal 2.

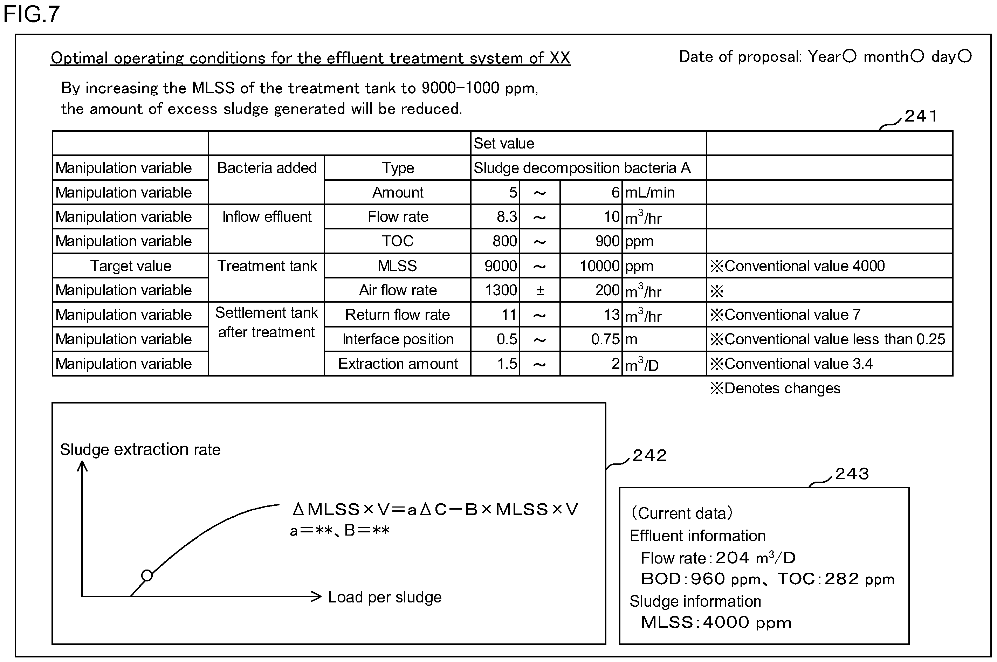

FIG. 7 is an explanatory diagram illustrating a display example of the screen. The control unit 21 of the information processing terminal 2 displays the screen illustrated in FIG. 7, on the basis of screen information received from the information processing device 1. In the screen, for example, an operating condition section 241, a trait graph section 242, an effluent/sludge information section 243, and the like are included.

The operating condition section 241 includes a list table indicating the control amount (the set value) of the operating condition as a list. In the list table, the operating condition recommended on the basis of the trait model, and the set value of each manipulation variable for attaining the operating condition are included. In the example illustrated in FIG. 7, the operating condition is an increase in the sludge concentration MLSS, and as the set value to be changed to increase the sludge concentration MLSS to a target value, the set values according to the air flow rate, the return flow rate, the interface position, and the extraction amount are displayed. The information processing device 1 displays the operating condition and the control amount specified on the basis of the trait model in the operating condition section 241, as a list.

In the example of FIG. 7, the type and the amount of bacteria added, and the flow rate and TOC of the effluent are not changed, and for example, in a case where the operating condition relevant to a plurality of manipulations such as a reduction in the condition for adding the bacteria or the amount of effluent is derived in addition to the increase in the sludge concentration MLSS, the set value according to the item may be changed. The information processing device 1 generates a list table on which all the derived operating conditions are reflected.

The trait graph section 242 displays the trait graph according to the generated trait model. The information processing device 1 generates the trait graph indicating the trait model to which the calculated sludge conversion rate a and sludge decomposition rate B are applied, and displays the trait graph in the trait graph section 242. The information processing device 1 plots the sludge load specified as a control target on the trait graph. In the trait graph section 242, the model formula of the generated trait model, and the calculated sludge conversion rate a and sludge decomposition rate B are further displayed.

The effluent/sludge information section 243 displays the effluent information and the sludge information used for generating the trait model and specifying the operating condition. As described above, by displaying the current effluent information and sludge information, trait model, operating condition, and the like on the screen in association with each other, it is possible to efficiently recognize the information.

According to this embodiment, by the trait model generated on the basis of the effluent information and the sludge information in the effluent treatment system, it is possible to specify the operating condition for reducing the generation rate of the excess sludge. The trait model is defined by using the sludge decomposition rate B indicating the effect by the addition of the sludge decomposition bacteria, and indicates the trait (the effect) of the effluent treatment system by the addition of the sludge decomposition bacteria. By such a trait model, it is possible to quantitatively evaluate the effect by the addition of the sludge decomposition bacteria with respect to the effluent information and the sludge information in the effluent treatment system. The operating condition preferable to exhibit the effect by the addition of the bacteria can be presented on the basis of the evaluation of the trait model. The user executes the effluent treatment by using the information processing terminal 2, in accordance with the presented operating condition, and thus, is capable of efficiently and effectively operating the effluent treatment system, and optimizing the state of the excess sludge in the effluent treatment system.

(Second Embodiment)

In a second embodiment, a trait model in a case where sedimentation property-improving bacteria are added as the bacteria will be described. Hereinafter, differences from the first embodiment will be mainly described, the same reference numerals will be applied to the configurations common to the first embodiment, and the detailed description thereof will be omitted.

In the second embodiment, the sedimentation property-improving bacteria are used as the bacteria added to the effluent. The sedimentation property-improving bacteria indicate bacteria for improving or maintaining the sedimentation property of the sludge. As with the sludge decomposition bacteria, it is possible to calculate an effect by the addition of the sedimentation property-improving bacteria by using the trait model including a parameter representing the effect by the addition of the sedimentation property-improving bacteria.

Examples of problems relevant to the state of the sludge in the effluent treatment system 200 include the sedimentation property of the sludge. By improving the sedimentation property of the sludge, it is possible to allow the solid-liquid separation of the water to be treated in the settlement tank 32b after treatment to favorably proceed, and improve the sludge concentration that is returned to the treatment tank 31. Accordingly, it is possible to reduce the amount of excess sludge and improve an effluent treatment property. By adding the sedimentation property-improving bacteria, it is possible to preferably change the sedimentation property of the sludge.

The information processing device 1 evaluates the effect of the sedimentation property-improving bacteria in the effluent treatment system 200 by using the trait model indicating a change in the sludge density, in a case where the sedimentation property-improving bacteria are added. It is indicated that the sedimentation property of the sludge becomes more excellent as the sludge density increases.

The trait model indicating a change in the sludge density with respect to the amount of effective bacteria per the sludge, in the effluent treatment system 200 to which the sedimentation property-improving bacteria are added, can be represented by Expression (4) described below using a parameter k2.
[Expression 4]

$$\Delta\rho = k2 \,...\,(4)$$

In Expression (4), $\Delta\rho$ is a sludge density change [kg/m$^3$]. k2 is a sludge density augmentation factor [kg/m$^3$] in the sludge in the treatment tank 31, and represents the effect by the addition of the sedimentation property-improving bacteria. The sludge density augmentation factor k2 may be a value that varies in accordance with the amount of effective bacteria.

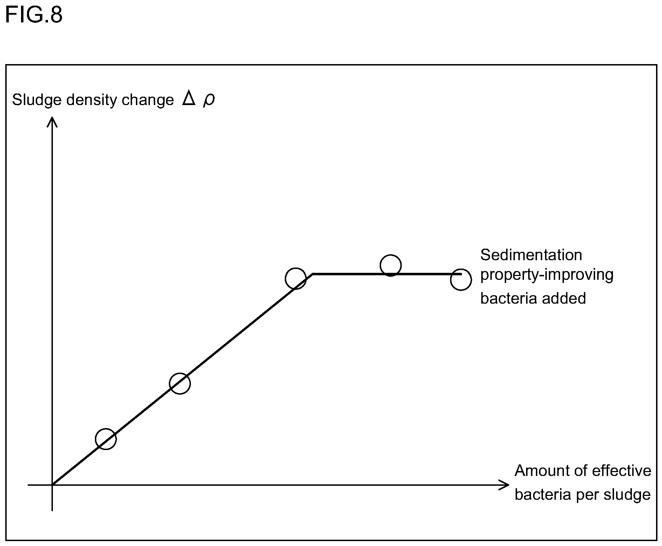

The trait model is indicated by a trait graph of which the slope is the sludge density augmentation factor k2. FIG. 8 is an explanatory diagram illustrating the trait graph in the second embodiment. In FIG. 8, the trait graph of Expression (4) is indicated by a solid line. In the trait graph, the vertical axis is the sludge density change $\Delta\rho$, and the horizontal axis is the amount of effective bacteria of the sedimentation property-improving bacteria per the sludge. Note that the trait graph illustrated in FIG. 8 is merely an example, and it is obvious that relationship between the amount of bacteria added and the sludge density augmentation factor k2 is different in accordance with the type of sedimentation property-improving bacteria, or the like.

In the example of FIG. 8, it is found that the sludge density change $\Delta\rho$ increases as the amount of effective bacteria increases until the amount of effective bacteria is a certain amount. In a case where the amount of effective bacteria exceeds the certain amount, the amount of sludge density change is not changed any more. Here, the sedimentation property of the excess sludge is improved as the sludge density $\rho$ increases. Accordingly, by controlling the operating condition of the effluent treatment system 200 such that the amount of effective bacteria is close to the certain amount, it is possible to increase the sludge density $\rho$ (the sludge density change $\Delta\rho$), and improve the sedimentation property of the sludge (obtain the effect by the addition of the bacteria).

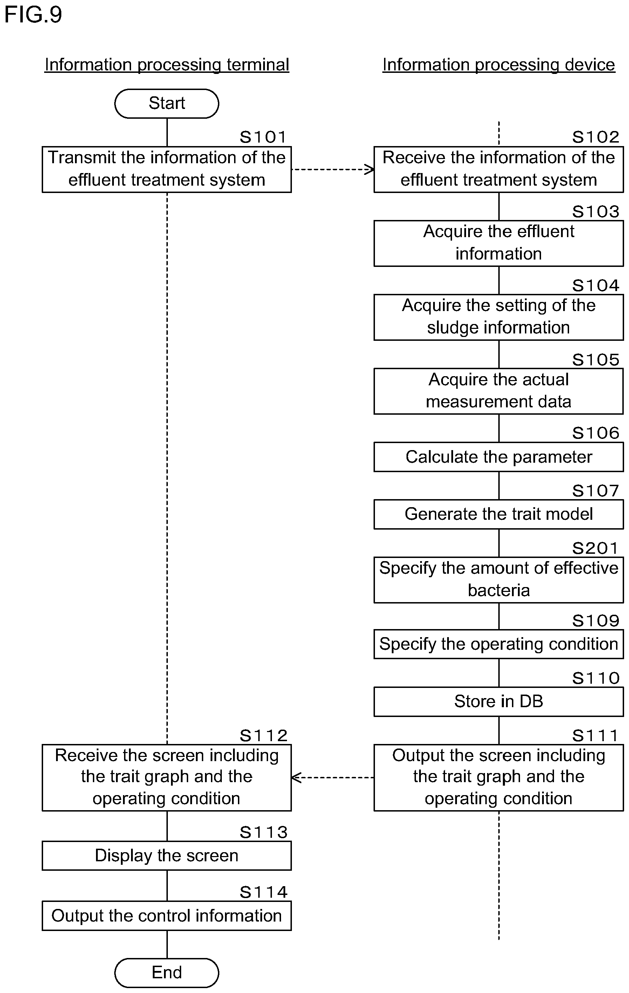

FIG. 9 is a flowchart illustrating a processing procedure that is executed by the information treatment system 100 of the second embodiment. The same step numbers will be applied to the processing common to FIG. 6, and the detailed description thereof will be omitted.

The information treatment system 100 executes the processing of step S101 to step S107 to generate the trait model. In step S103, the control unit 11 of the information processing device 1, for example, acquires the effluent information including the type and the added amount of the sedimentation property-improving bacteria. In step S104, the control unit 11, for example, acquires the sludge information including the SV and the SVI of the sludge.

In step S106, the control unit 11 calculates the sludge density augmentation factor k2, as the parameter, by fitting calculation based on a plurality of pieces of actual measurement data using the effluent information and the sludge information in the effluent treatment system 200 of the user. In step S107, the control unit 11 generates the trait model indicating the sludge density change $\Delta\rho$ with respect to the amount of effective bacteria per the sludge, including the sludge density augmentation factor k2.

The control unit 11 specifies the amount of effective bacteria at which the sludge density change $\Delta\rho$ of the effluent treatment system 200 satisfies a predetermined condition by using the generated trait model (step S201). Specifically, the control unit 11 specifies the threshold value (the range of the threshold value) of the amount of effective bacteria of the effluent treatment system 200 such that the sludge density change $\Delta\rho$ is greater than or equal to the threshold value set in advance. The control unit 11 may specify the amount of effective bacteria such that the sludge density $\rho$ is greater than or equal to the threshold value. The control unit 11 specifies the operating condition in which the amount of effective bacteria of the effluent treatment system 200 is greater than or equal to the specified threshold value (to be in the range of the threshold value) (step S109).

Thereafter, the information treatment system 100 executes the processing of step S110 to step S114, and performs the control of the effluent treatment system 200 based on the specified operating condition.

According to this embodiment, the trait model indicating the sludge density (the sedimentation property of the sludge), in a case where the sedimentation property-improving bacteria are added, can be generated on the basis of the effluent information and the sludge information in the effluent treatment system. It is possible to specify the operating condition for improving the sedimentation property of the sludge by using the trait model, and optimize the state of the sludge in the effluent treatment system by executing the effluent treatment, in accordance with the specified operating condition.

(Third Embodiment)

In a third embodiment, a trait model in a case where odor substance decomposition bacteria are added as the bacteria will be described. Hereinafter, differences from the first embodiment will be mainly described, the same reference numerals will be applied to the configurations common to the first embodiment, and the detailed description thereof will be omitted.

In the third embodiment, the odor substance decomposition bacteria are used as the bacteria added to the effluent. The odor substance decomposition bacteria indicate the bacteria having decomposition capability with respect to an odor substance in the effluent.

Examples of problems relevant to the state of the effluent (the treated water) in the effluent treatment system 200 include the amount of odor substances in the effluent. By improving the decomposition rate of the odor substance in the effluent, it is possible to reduce the amount of odor substances in the effluent. The information processing device 1 evaluates the effect of the odor substance decomposition bacteria in the effluent treatment system 200 by using the trait model indicating an odor substance decomposition rate, in a case where the odor substance decomposition bacteria are added. The odor substance decomposition rate indicates the decomposition rate of the odor substance in the effluent treatment system 200. It is indicated that the amount of odor substances included in the effluent (the treated water) that flows out from the effluent treatment system 200 decreases as the odor substance decomposition rate increases.

The odor substance decomposition rate in the effluent treatment system 200 is obtained by subtracting the amount of odor substance decomposition bacteria in the effluent that flows into the effluent treatment system 200 from the amount of odor substance decomposition bacteria in the effluent (the treated water) that flows out from the effluent treatment system 200. The trait model indicating a change in the odor substance decomposition rate with respect to a load per the effective bacteria unit amount of the odor substance decomposition bacteria, in the effluent treatment system 200 to which the odor substance decomposition bacteria are added, can be represented by Expression (5) described below using a parameter k3.

[Expression 5]

$$(U3out - U3in) = -(k3 \times MLSS \times V) \times U3 \times T \dots (5)$$

In Expression (5), U3out is the odor substance concentration [mol/m$^3$] in the effluent that flows out from the effluent treatment system 200, U3in is the odor substance concentration [mol/m$^3$] in the effluent that flows into the effluent treatment system 200, MLSS is the sludge concentration [kg/m$^3$], V is the volume [m$^3$] of the treatment tank 31, U3 is the odor substance concentration [mol/m$^3$] in the effluent, and T is the residence time [hr] (= Volume V[m$^3$] of Treatment Tank 31/Amount A [m$^3$/hr] of Effluent). k3 is an odor substance decomposition reaction factor [1/kg/hr] in the treatment tank 31, and represents an effect by the addition of the odor substance decomposition bacteria. The odor substance decomposition reaction factor k3 may be a value that varies in accordance with the amount of effective bacteria. The odor substance decomposition rate is indicated by (U3out - U3in)A/(U3in)A.

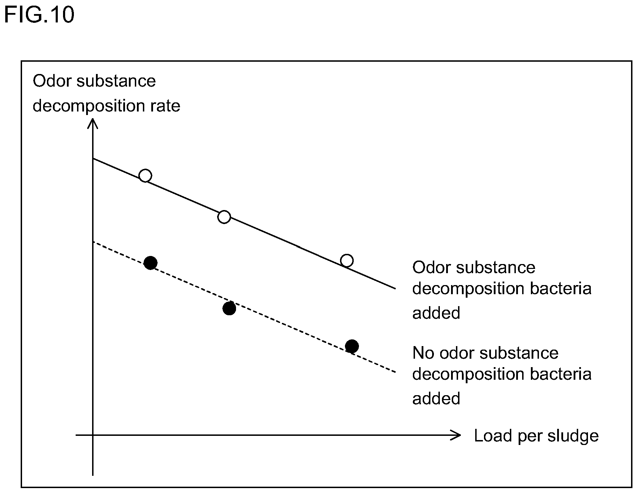

The trait model is indicated by a trait graph of which the slope depends on the odor substance decomposition reaction factor k3. FIG. 10 is an explanatory diagram illustrating the trait graph in the third embodiment. In FIG. 10, the trait graph of Expression (5) is indicated by a solid line. In the trait graph, the vertical axis is the odor substance decomposition rate, and the horizontal axis is the load per the sludge. For comparison, a trait graph in a case where the odor substance decomposition bacteria are not added is indicated by a broken line. In a case where the odor substance decomposition bacteria are added, the trait graph is moved to a direction in which the odor substance decomposition rate increases, compared to a case where the odor substance decomposition bacteria are not added. Note that the trait graph illustrated in FIG. 10 is merely an example.

From Expression (5) and FIG. 10, it is found that the odor substance decomposition rate increases as the load per the sludge decreases. Accordingly, by controlling the operating condition of the effluent treatment system 200 such that the load per the sludge decreases, it is possible to improve the odor substance decomposition rate, and reduce the amount of odor substances (obtain the effect by the addition of the bacteria).

Note that in a case where the treatment tank 31 is configured in a plurality of stages, the odor substance decomposition rate in each stage (each tank) may be calculated in order from the first stage (the first tank). In this case, when including a tank not containing the sludge, the odor substance decomposition rate in the tank not containing the sludge can be calculated by an expression in which the sludge concentration MLSS in Expression (5) is omitted. Similarly, even in a case where the odor substance decomposition bacteria are added to the pretreatment tank provided before the treatment tank 31, the trait model can be defined by the expression in which the sludge concentration MLSS in Expression (5) is omitted.

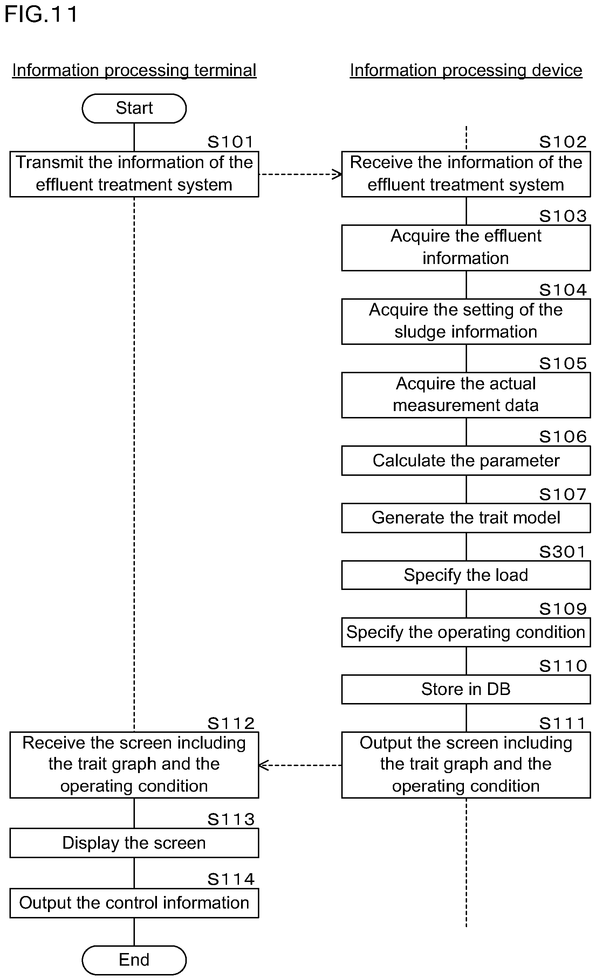

FIG. 11 is a flowchart illustrating a processing procedure that is executed by the information treatment system 100 of the third embodiment. The same step numbers will be applied to the processing common to FIG. 6, and the detailed description thereof will be omitted.

The information treatment system 100 executes the processing of step S101 to step S107 to generate the trait model. In step S103, the control unit 11 of the information processing device 1, for example, acquires the effluent information including the type of odor substance decomposition bacteria, the added amount of the odor substance decomposition bacteria, the flow rate of the effluent, and the odor substance concentration in the effluent. In step S104, the control unit 11, for example, acquires the sludge information including the sludge concentration MLSS.

In step S106, the control unit 11 calculates the odor substance decomposition reaction factor k3, as the parameter, by fitting calculation based on a plurality of pieces of actual measurement data using the effluent information and the sludge information in the effluent treatment system 200 of the user. In step S107, the control unit 11 generates the trait model indicating a change in the odor substance decomposition rate with respect to the load per the sludge, including the odor substance decomposition reaction factor k3.

The control unit 11 specifies the load per the sludge at which the odor substance decomposition rate of the effluent treatment system 200 satisfies a predetermined condition by using the generated trait model (step S301). Specifically, the control unit 11 specifies the threshold value (the range of the threshold value) of the load of the effluent treatment system 200 such that the odor substance decomposition rate is greater than or equal to the threshold value set in advance. The control unit 11 specifies the operating condition in which the load of the effluent treatment system 200 is less than the specified threshold value (to be in the range of the threshold value) (step S109).

Thereafter, the information treatment system 100 executes the processing of step S110 to step S114, and performs the control of the effluent treatment system 200 based on the specified operating condition.

According to this embodiment, the trait model indicating the odor substance decomposition rate, in a case where the odor substance decomposition bacteria are added, can be generated on the basis of the effluent information and the sludge information in the effluent treatment system. It is possible to specify the operating condition for reducing the amount of odor substances in the effluent by using the trait model, and optimize the state of the effluent in the effluent treatment system by executing the effluent treatment, in accordance with the specified operating condition.

(Fourth Embodiment)

In a fourth embodiment, a trait model in a case where persistent substance decomposition bacteria are added as the bacteria will be described. Hereinafter, differences from the first embodiment will be mainly described, the same reference numerals will be applied to the configurations common to the first embodiment, and the detailed description thereof will be omitted.

In the fourth embodiment, the persistent substance decomposition bacteria are used as the bacteria added to the effluent. The persistent substance decomposition bacteria indicate bacteria having decomposition capability with respect to a persistent substance in the effluent.

Examples of problems relevant to the state of the effluent (the treated water) in the effluent treatment system 200 include the amount of persistent substances in the effluent. The information processing device 1 evaluates the effect of the persistent substance decomposition bacteria in the effluent treatment system 200 by using the trait model indicating the persistent substance decomposition rate, in a case where the persistent substance decomposition bacteria are added. The persistent substance decomposition rate indicates the decomposition rate of the persistent substance in the effluent treatment system 200. It is indicated that the amount of persistent substances contained in the effluent (the treated water) that flows out from the effluent treatment system 200 decreases as the persistent substance decomposition rate increases.

The persistent substance decomposition rate in the effluent treatment system 200 is obtained by subtracting the amount of persistent substance decomposition bacteria in the effluent that flows into the effluent treatment system 200 from the amount of persistent substance decomposition bacteria in the effluent (the treated water) that flows out from the effluent treatment system 200. The trait model indicating a change in the persistent substance decomposition rate with respect to a load per the effective bacteria unit amount of the persistent substance decomposition bacteria, in the effluent treatment system 200 to which the persistent substance decomposition bacteria are added, can be represented by Expression (6) described below using a parameter k4.

[Expression 6]

$$(U4out - U4in) = -(k4 \times MLSS \times V) \times U4 \times T \dots (6)$$

In Expression (6), U4out is the persistent substance concentration [mol/m$^3$] in the effluent that flows out from the effluent treatment system 200, U4in is the persistent substance concentration [mol/m$^3$] in the effluent that flows into the effluent treatment system 200, MLSS is the sludge concentration [kg/m$^3$], V is the volume [m$^3$] of the treatment tank 31, U4 is the persistent substance concentration [mol/m$^3$] in the effluent, and T is the residence time [hr] (= Volume V [m$^3$] of Treatment Tank 31/Amount A [m$^3$/hr] of Effluent). k4 is a persistent substance decomposition reaction factor [1/kg/hr] per the effective bacteria unit amount in the sludge in the treatment tank 31, and represents an effect by the addition of the persistent substance decomposition bacteria. The persistent substance decomposition reaction factor k4 may be a value that varies in accordance with the amount of effective bacteria. The persistent substance decomposition rate is indicated by (U4out - U4in)A/(U4in)A.

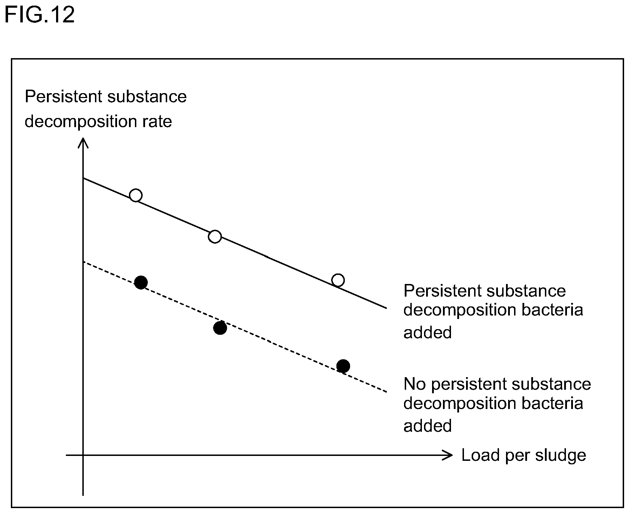

The trait model is indicated by a trait graph of which the slope depends on the persistent substance decomposition reaction factor k4. FIG. 12 is an explanatory diagram illustrating the trait graph in the fourth embodiment. In FIG. 12, the trait graph of Expression (6) is indicated by a solid line. In the trait graph, the vertical axis is the persistent substance decomposition rate, and the horizontal axis is the load per the sludge. For comparison, a trait graph in a case where the persistent substance decomposition bacteria are not added is indicated by a broken line. In a case where the persistent substance decomposition bacteria are added, the trait graph is moved to a direction in which the persistent substance decomposition rate increases, compared to a case where the persistent substance decomposition bacteria are not added. Note that the trait graph illustrated in FIG. 12 is merely an example.

From Expression (6) and FIG. 12, it is found that the persistent substance decomposition rate increases as the load per the sludge decreases. Accordingly, by controlling the operating condition of the effluent treatment system 200 such that the load per the sludge decreases, it is possible to improve the persistent substance decomposition rate, and reduce the amount of persistent substances (obtain the effect by the addition of the bacteria).

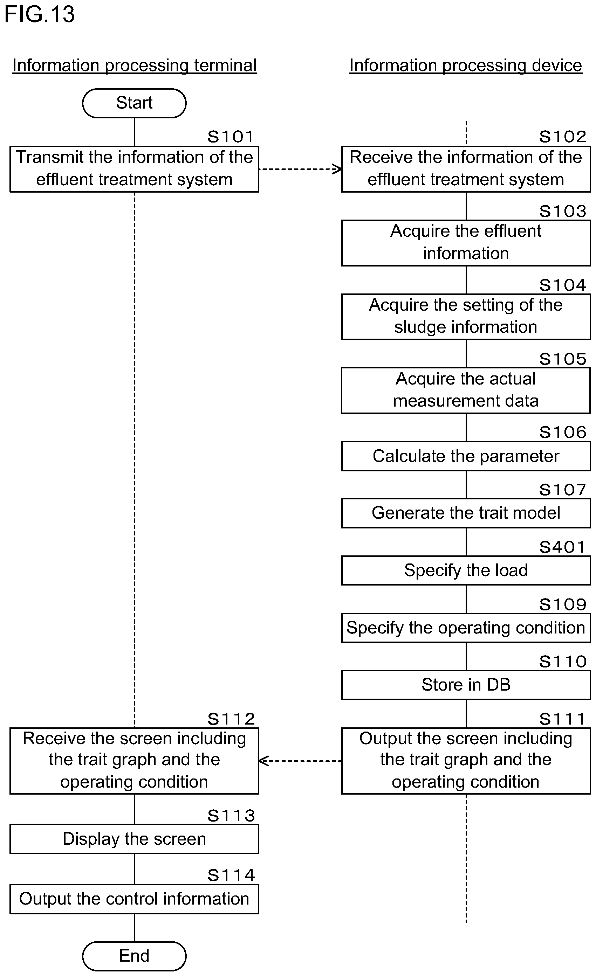

FIG. 13 is a flowchart illustrating a processing procedure that is executed by the information treatment system 100 of the fourth embodiment. The same step numbers will be applied to the processing common to FIG. 6, and the detailed description thereof will be omitted.

The information treatment system 100 executes the processing of step S101 to step S107, and generates the trait model. In step S103, the control unit 11 of the information processing device 1, for example, acquires the effluent information including the type of persistent substance decomposition bacteria, the added amount of the persistent substance decomposition bacteria, the flow rate of the effluent, and the persistent substance concentration in the effluent. In step S104, the control unit 11, for example, acquires the sludge information including the sludge concentration MLSS.

In step S106, the control unit 11 calculates the persistent substance decomposition reaction factor k4, as the parameter, by fitting calculation based on a plurality of pieces of actual measurement data using the effluent information and the sludge information in the effluent treatment system 200 of the user. In step S 107, the control unit 11 generates the trait model indicating a change in the persistent substance decomposition rate with respect to the load per the sludge, including the persistent substance decomposition reaction factor k4.

The control unit 11 specifies the load per the sludge at which the persistent substance decomposition rate of the effluent treatment system 200 satisfies a predetermined condition by using the generated trait model (step S401). Specifically, the control unit 11 specifies the threshold value (the range of the threshold value) of the load of the effluent treatment system 200 such that the persistent substance decomposition rate is greater than or equal to the threshold value set in advance. The control unit 11 specifies the load of the effluent treatment system 200 is less than the specified threshold value (to be in the range of the threshold value) (step S109).

Thereafter, the information treatment system 100 executes the processing of step S110 to step S114, and performs the control of the effluent treatment system 200 based on the specified operating condition.

According to this embodiment, the trait model indicating the persistent substance decomposition rate, in a case where the persistent substance decomposition bacteria are added, can be generated on the basis of the effluent information and the sludge information in the effluent treatment system. It is possible to specify the operating condition for reducing the amount of persistent substances in the effluent by using the trait model, and optimize the state of the effluent in the effluent treatment system by executing the effluent treatment, in accordance with the specified operating condition.

The plurality of trait models in each of the embodiments described above can be used by being suitably combined. A plurality of bacteria selected from the sludge decomposition bacteria, the sedimentation property-improving bacteria, the odor substance decomposition bacteria, and the persistent substance decomposition bacteria can be added to the effluent treatment system 200, in accordance with the state of the sludge or the effluent. In this case, the information processing device 1 specifies the operating condition such that the trait of the effluent treatment system 200 in each of the plurality of trait models satisfies a predetermined condition by using each of the plurality of trait models according to the type of bacteria added. The specified operating conditions are combined to derive the optimum operating condition.

For example, the information processing device 1 specifies a first operating condition in which the trait of the effluent treatment system 200 satisfies a predetermined condition, on the basis of a first trait model. In addition, the information processing device 1 specifies a second operating condition in which the trait of the effluent treatment system 200 satisfies a predetermined condition, on the basis of a second trait model. The information processing device 1 determines the operating condition including manipulation contents , the control amount, and the like that satisfy both of the first operating condition and the second operating condition. In the case where a plurality of operating conditions are proposed, the operating condition may be sequentially determined in accordance with the priority of each of the operating conditions (the manipulation contents, the manipulation variable, and the like) set in advance. Accordingly, integrated evaluation according to the mode in which the bacteria are added is available.

(Fifth Embodiment)

In a fifth embodiment, the parameter in the trait model is output by using an estimation model. Hereinafter, differences from the first embodiment will be mainly described, the same reference numerals will be applied to the configurations common to the first embodiment, and the detailed description thereof will be omitted.

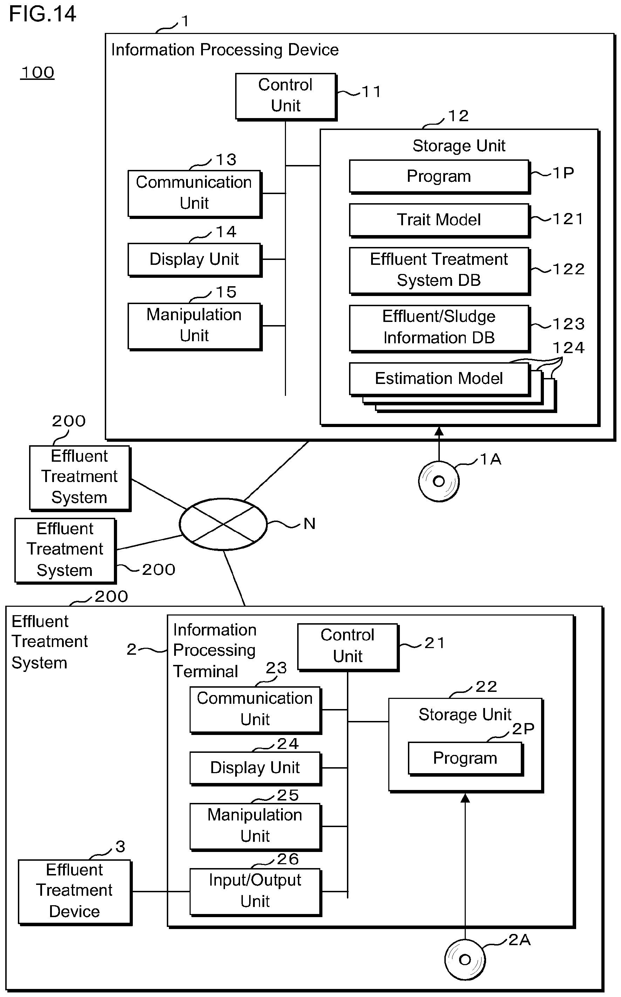

FIG. 14 is a block diagram illustrating the configuration of the information treatment system 100 of the fifth embodiment. The information processing device 1 of the fifth embodiment stores an estimation model 124 in the storage unit 12. The estimation model 124 is a machine learning model generated by machine learning. It is assumed that the estimation model 124 is used as a program module configuring a part of artificial intelligence software. The information processing device 1 outputs the parameter in the trait model by using the estimation model 124.

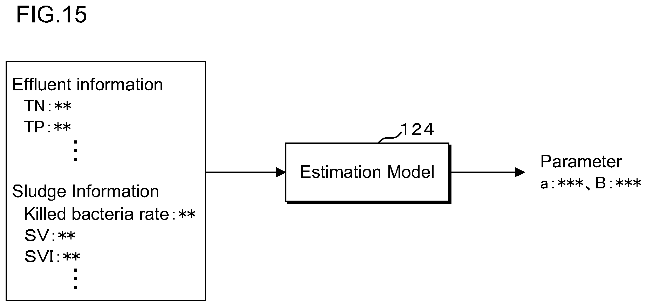

FIG. 15 is an explanatory diagram illustrating the outline of the estimation model 124. The estimation model 124 is a model that has learned predetermined training data. The estimation model 124 outputs the parameter of the trait model indicating the trait of the effluent treatment system 200 using the effluent information and the sludge information in the effluent treatment system 200 as input. The estimation model 124 is constructed in advance by deep learning using a neural network in the information processing device 1 or an external device. In the storage unit 12, for example, a plurality of estimation models 124 generated for each type of trait model are stored.

Hereinafter, the estimation model 124 outputting the parameter in the trait model indicating the sludge generation rate of the effluent treatment system 200, the sludge conversion rate a, and the sludge decomposition rate B, in a case where the sludge decomposition bacteria are added to the effluent treatment system 200 as the bacteria, will be described.

The information processing device 1 generates in advance the estimation model 124 by performing machine learning for learning the predetermined training data. Then, the information processing device 1 inputs the effluent information and the sludge information acquired from the information processing terminal 2 to the estimation model 124, and outputs the parameter of the trait model.

The estimation model 124 includes an input layer for inputting the effluent information and the sludge information, an output layer for outputting the parameter, and an intermediate layer (a hidden layer) for extracting a feature amount. The intermediate layer includes a plurality of nodes for extracting the feature amount of the input data, and delivers the feature amount extracted by using various parameters to the output layer. In a case where the detected value is input to the input layer, arithmetic is performed in the intermediate layer by the learned parameter, and output information relevant to the sludge conversion rate a and the sludge decomposition rate B is output from the output layer.

Input information input to the estimation model 124 is the effluent information and the sludge information in the effluent treatment system 200 of the user. The effluent information includes information relevant to the composition of effluent constituents configuring the effluent in the effluent treatment system 200. Examples of the effluent information that can be the input of the estimation model 124 include the same data as the effluent information illustrated in FIG. 4, but the effluent information is not limited thereto. In this embodiment, the effluent information that is input to the estimation model 124 outputting the sludge conversion rate a and the sludge decomposition rate B may include TN, TP, SS, and each component.

The sludge information includes information relevant to the composition of sludge constituents configuring the sludge in the effluent treatment system 200. Examples of the sludge information that can be the input of the estimation model 124 include the same data as the sludge information illustrated in FIG. 4, but the sludge information is not limited thereto. In this embodiment, the sludge information that is input to the estimation model 124 outputting the sludge conversion rate a and the sludge decomposition rate B may include the killed bacteria rate, the bacterial flora, the SV, the SVI, the content of the filamentous bacteria, the flock size, the type and the number of protozoans, the organic compound/inorganic compound ratio, and the sugar/protein content.

The output information output from the estimation model 124 is the sludge conversion rate a and the sludge decomposition rate B. The output layer includes nodes respectively corresponding to the set sludge conversion rate a and sludge decomposition rate B, and outputs the degree of certainty with respect to each of the sludge conversion rate a and the sludge decomposition rate B, as a score. The information processing device 1 is capable of setting the sludge conversion rate a and the sludge decomposition rate B with the highest score, or the sludge conversion rate a and the sludge decomposition rate B with a score of greater than or equal to a threshold value, as the output value of the output layer. Note that the output layer may include one output node outputting the sludge conversion rate a and the sludge decomposition rate B with the highest degree of certainty, instead of including a plurality of output nodes outputting the degree of certainty of each of the sludge conversion rate a and the sludge decomposition rate B.

The control unit 11 of the information processing device 1 collects in advance an information group in which known parameters are given to a large number of effluent information and sludge information collected in the past, as training data and learns the estimation model 124. The information processing device 1, for example, may generate the training data, on the basis of the information accumulated in the effluent treatment system DB 122 and the effluent/sludge information DB 123. The information processing device 1 acquires the training data generated by labeling the parameter based on the actual measurement data stored in the effluent treatment system DB 122 with respect to the effluent information and the sludge information stored in the effluent/sludge information DB 123, on the basis of the effluent information ID and the sludge information ID.

The information processing device 1, for example, learns various parameters, weights, and the like configuring the estimation model 124 by using an error back-propagation method to output the parameter according to the effluent information and the sludge information in a case where the effluent information and the sludge information are input on the basis of acquired training data. As described above, for the effluent information and the sludge information, it is possible to construct the estimation model 124 that is learned such that the parameter of the trait model indicating the trait of the effluent treatment system can be suitably estimated.

Similarly, for the parameter in each of the other trait models, the information processing device 1 constructs the estimation model 124. That is, the information processing device 1 constructs the estimation model 124 outputting each of the sludge density augmentation factor k2, the odor substance decomposition reaction factor k3, and the persistent substance decomposition reaction factor k4 in a case where the effluent information and the sludge information are input. Note that the effluent information and the sludge information that are input to the estimation model 124 can be suitably changed in accordance with the parameter that is a prediction target.

Further, it is preferable that a plurality of estimation models 124 are prepared in accordance with the effluent treatment system 200 of the user. Specifically, a plurality of estimation models 124 may be prepared in accordance with the type of effluent to be the treatment target of the effluent treatment system 200. For example, the composition of the effluent constituent is greatly different between the effluent in the chemical plant and the effluent in the food factory. Accordingly, by constructing the estimation model 124 for each type of effluent, it is possible to more preferably estimate the parameter.

In addition, the estimation model 124 may be individually prepared for each effluent treatment system 200 of the user. The information processing device 1, for example, constructs the estimation model 124 for each type of effluent by using the training data as described above, and then, further performs fine-tuning by using the effluent information and the sludge information in the effluent treatment system 200 of each user. The information processing device 1 stores the effluent treatment system ID of the effluent treatment system 200 and each of the estimation models 124 in the storage unit 12 in association with each other. Accordingly, it is possible to efficiently and preferably estimate the parameter with respect to each of the effluent treatment systems 200.

The configuration of the estimation model 124 is not limited insofar as the parameter according to the effluent information and the sludge information can be recognized. The estimation model 124 may be a learning model constructed by other learning algorithms such as a support vector machine and a regression tree. In the estimation model 124, the effluent information and the sludge information acquired in time-series may be set as input. In the case of using the time-series data, the estimation model 124 may be a long short term memory (LSTM), a transformer, or the like. The estimation model 124 may output the parameter by a rule-based method.

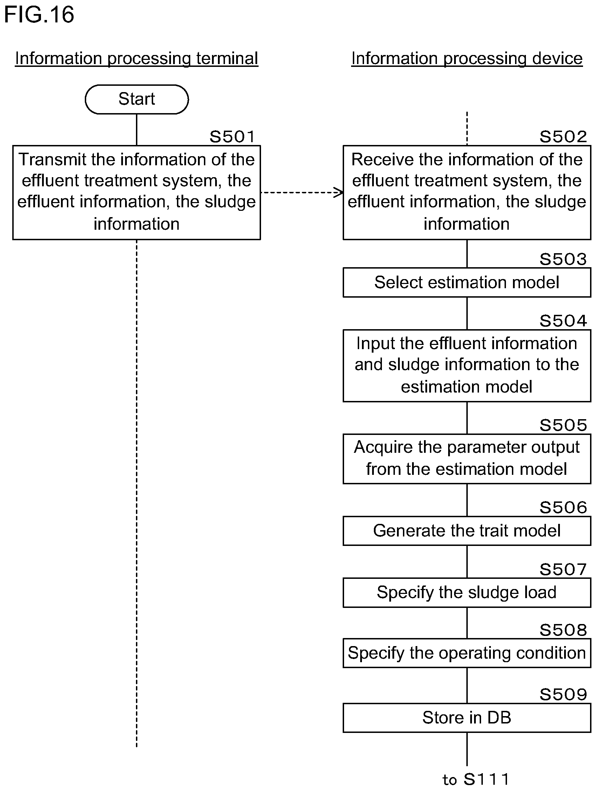

FIG. 16 is a flowchart illustrating a processing procedure that is executed by the information treatment system 100 of the fifth embodiment. Hereinafter, a trait model indicating the sludge generation rate of the effluent treatment system 200, in a case where the sludge decomposition bacteria are added to the effluent treatment system 200 as the bacteria, is generated.

The control unit 21 of the information processing terminal 2 transmits the information of the effluent treatment system 200, the effluent information, and the sludge information to the information processing device 1 (step S501). In the effluent information and the sludge information, data with respect to each item required to generate the trait model is included.

The control unit 11 of the information processing device 1 receives the information of the effluent treatment system 200, the effluent information, and the sludge information (step S502).

The control unit 11 selects the estimation model 124 according to the generated specific model among the plurality of estimation models 124 stored in the storage unit 12 (step S503). Note that in a case where the estimation model 124 is prepared for each type of effluent, the control unit 11 specifies the effluent type associated with the effluent treatment system ID included in the information of the effluent treatment system 200, on the basis of the information stored in the effluent treatment system DB 122. The control unit 11 selects the estimation model 124 according to the specified effluent type. In addition, in a case where the estimation model 124 is prepared for each effluent treatment system 200 of the user, the control unit 11 selects the estimation model 124 associated with the effluent treatment system ID.

The control unit 11 inputs the received effluent information and sludge information to the estimation model 124 (step S504). The control unit 11 acquires the parameter of the trait model, the sludge conversion rate a, and the sludge decomposition rate B output from the estimation model 124 (step S505). The control unit 11 generates the trait model including the acquired sludge conversion rate a and sludge decomposition rate B (step S506).

The control unit 11 specifies the threshold value of the sludge load at which the sludge generation rate or the sludge extraction rate of the effluent treatment system 200 satisfies a predetermined condition by using the generated trait model (step S507), and specifies the operating condition in which the sludge load is less than the specified threshold value (to be in the range of the threshold value) (step S508). The control unit 11 stores the effluent information, the sludge information, the trait model, and the operating condition in the effluent treatment system DB 122 and the effluent/sludge information DB 123, respectively (step S509).

Thereafter, the information treatment system 100 executes the processing of step S111 to step S114 illustrated in FIG. 6, and performs the control of the effluent treatment system 200 based on the specified operating condition.

In the above description, an example has been described in which the derivation of the parameter, and the like are executed by the information processing device 1, but the subject of each processing is not limited. For example, the estimation model 124 may be stored in the information processing terminal 2, and the parameter may be derived on the information processing terminal 2 side.

It is preferable that the information treatment system 100 repeatedly executes the processing described above in periodic intervals to periodically collect the effluent information and the sludge information, and suitably update the parameter in the trait model. The information processing device 1 acquires the effluent information and the sludge information from the information processing terminal 2 for each predetermined period, and stores the effluent information and the sludge information in the effluent/sludge information DB 123. The information processing device 1 derives the parameter for each predetermined period, on the basis of the effluent information and the sludge information for each predetermined period. In addition, the information processing device 1 specifies the operating condition for each predetermined period, on the basis of the trait model to which the derived parameter for each predetermined period is applied, and transmits the operating condition to the information processing terminal 2. The state of the effluent in the effluent treatment system 200 and the device such as the treatment tank 31 that treats the effluent is affected by a seasonal factor, and is greatly changed in accordance with a treatment time. Accordingly, by updating the parameter for each predetermined period to revise the operating condition, it is possible to preferably maintain the state of the effluent treatment system 200 continuously over a long period of time.

According to this embodiment, it is possible to easily acquire the parameter of the trait model by using the estimation model 124. By only acquiring the effluent information and the sludge information, it is possible to generate the trait model according to the effluent treatment system 200 of the user without performing the laboratory experiment or the like, and thus, it is possible to reduce the man-hour to generate the trait model, and increase the convenience of the information treatment system 100.

(Sixth Embodiment)

In a sixth embodiment, the management information of the bacteria is output. Hereinafter, differences from the first embodiment will be mainly described, the same reference numerals will be applied to the configurations common to the first embodiment, and the detailed description thereof will be omitted.

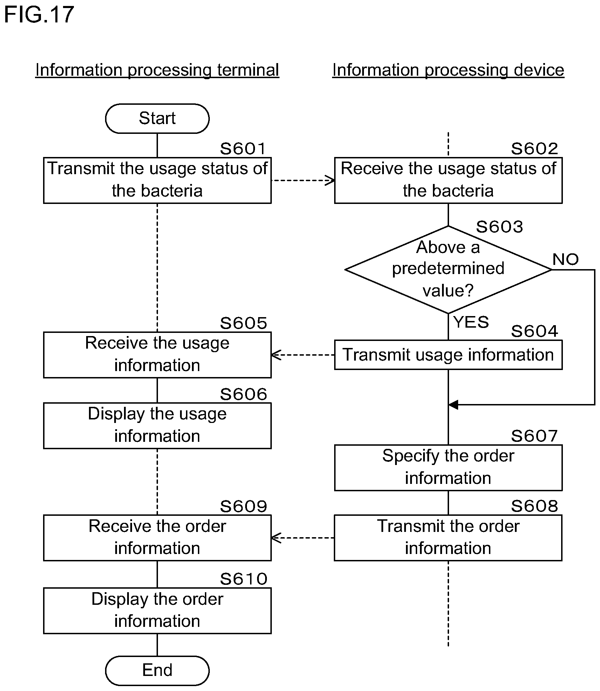

FIG. 17 is a flowchart illustrating a processing procedure that is executed by the information treatment system 100 of the sixth embodiment.

The control unit 21 of the information processing terminal 2 transmits the usage status of the bacteria added to the effluent treatment system 200 to the information processing device 1 (step S601). In the usage status of the bacteria, for example, the date of use and the used amount of the bacteria are included. The control unit 21 may transmit the usage status each time when the bacteria are added to the effluent treatment system 200, or may transmit the usage status during the period at predetermined intervals.

The control unit 11 of the information processing device 1 receives the usage status of the bacteria (step S602). The control unit 11 determines whether the used amount of the bacteria in the effluent treatment system 200 of the user is greater than or equal to a predetermined value, on the basis of the received usage status of the bacteria (step S603). The control unit 11, for example, determines whether the total used amount of the bacteria since a predetermined reference date (for example, the previous order date, charging date, and the like of the bacteria) is greater than or equal to a predetermined value set in advance. The control unit 11 may determine whether the amount of stock based on the used amount of the bacteria is less than a predetermined value set in advance.

In a case where it is determined that the used amount is less than the predetermined value (step S603: NO), the control unit 11 causes the processing to proceed to step S607. In a case where it is determined that the used amount is greater than or equal to the predetermined value (step S603: YES), the control unit 11 transmits usage information for notifying that the used amount is greater than or equal to the predetermined value to the information processing terminal 2 (step S604).

The control unit 21 of the information processing terminal 2 receives the usage information (step S605). The control unit 21 displays the received usage information to the display unit 24 (step S606). The control unit 21 may output the usage information by a vocal alert or the like.

The control unit 11 of the information processing device 1 specifies the order information of the bacteria including the next order date, order quantity, and the like of the bacteria, on the basis of the usage status of the bacteria (step S607). The control unit 11 may estimate the used amount of the bacteria and specify the order information by adding the information relevant to the bacteria in the operating condition specified by using the trait model. The control unit 11 transmits the specified order information of the bacteria to the information processing terminal 2 (step S608). Note that the control unit 11 may transmit the order information to the information processing terminal 2 at a timing when the used amount of the bacteria is greater than or equal to the predetermined value.

The control unit 21 of the information processing terminal 2 receives the order information of the bacteria (step S609). The control unit 21 displays the received order information of the bacteria on the display unit 24 (step S610), and ends a series of processing.

According to this embodiment, the usage status of the bacteria is managed by the information processing device 1. By outputting a notification in a case where a large amount of bacteria is used, in addition to the information relevant to the order of the bacteria, it is possible to prevent out of stock of the bacteria. By performing the management of the bacteria, in addition to the operation of the effluent treatment system 200, it is possible to more preferably maintain the state of the effluent treatment system 200.

Reference Signs List

| | |
|---|---|
| 100 | information treatment system |
| 1 | information processing device |
| 11 | control unit |
| 12 | storage unit |
| 13 | communication unit |
| 14 | display unit |
| 15 | manipulation unit |
| 121 | trait model |
| 122 | effluent treatment system DB |
| 123 | effluent/sludge information DB |
| 1P | program |
| 1A | recording medium |
| 2 | information processing terminal |
| 21 | control unit |
| 22 | storage unit |
| 23 | communication unit |
| 24 | display unit |
| 25 | manipulation unit |
| 26 | input/output unit |
| 2P | program |
| 2A | recording medium |
| 3 | effluent treatment device (effluent treatment system) |
| 31 | treatment tank |
| 32a (32) | settlement tank before treatment |
| 32b (32) | settlement tank after treatment |

**Claims**

1. An information processing method for causing a computer to execute processing of generating a trait model indicating a trait of an effluent treatment system, on the basis of effluent information including information of an effluent in the effluent treatment system using an activated sludge method and bacteria added to the effluent, and sludge information of sludge in the effluent treatment system.

2. The information processing method according to claim 1, comprising specifying an operating condition in the effluent treatment system in which the trait satisfies a predetermined condition on the basis of the trait model.

3. The information processing method according to claim 1 or 2, wherein the effluent information includes a composition of an effluent constituent constituting the effluent and/or the sludge information includes a composition of a sludge constituent constituting the sludge.

4. The information processing method according to any one of claims 1 to 3, comprising generating the trait model indicating a change in a sludge extraction rate or a sludge generation rate with respect to a load per sludge, in the effluent treatment system in which sludge decomposition bacteria for reducing excess sludge in the effluent treatment system are added as the bacteria.

5. The information processing method according to claim 4, wherein the trait model is represented by an expression described below,

[Expression 1]

$$\Delta MLSS \times V = a\Delta C - B \times MLSS \times V$$

[in the expression, MLSS is a sludge concentration, V is a tank volume, ΔC is an amount of treated carbon, a is a sludge conversion rate, and B is a sludge decomposition rate].

6. The information processing method according to any one of claims 1 to 5, comprising
generating the trait model indicating a change in a sludge density with respect to an amount of effective bacteria per sludge, in the effluent treatment system in which sedimentation property-improving bacteria for improving a sedimentation property of the sludge in the effluent treatment system are added as the bacteria.

7. The information processing method according to claim 6,

wherein the trait model is represented by an expression described below,

[Expression 2]

$$\Delta\rho = k2$$

[in the expression, Δρ is a sludge density change, and k2 is a sludge density augmentation factor].

8. The information processing method according to any one of claims 1 to 7, comprising
generating the trait model indicating a change in an odor substance decomposition rate with respect to a load per sludge, in the effluent treatment system in which odor substance decomposition bacteria for decomposing an odor substance in the effluent in the effluent treatment system are added as the bacteria.

9. The information processing method according to claim 8,

wherein the trait model is represented by an expression described below,

[Expression 3]

$$(U3out - U3in) = -(k3 \times MLSS \times V) \times U3 \times T$$

[in the expression, U3out is an odor substance concentration in the effluent that flows out from the effluent treatment system, U3in is an odor substance concentration in the effluent that flows into the effluent treatment system, MLSS is a sludge concentration, V is a tank volume, U3 is an odor substance concentration in the effluent, T is a residence time, and k3 is an odor substance decomposition reaction factor].

10. The information processing method according to any one of claims 1 to 9, comprising
generating the trait model indicating a change in a persistent substance decomposition rate with respect to a load per sludge, in the effluent treatment system in which persistent substance decomposition bacteria for decomposing a persistent substance in the effluent in the effluent treatment system are added as the bacteria, is generated.

11. The information processing method according to claim 10,

wherein the trait model is represented by an expression described below,

[Expression 4]

$$(U4out - U4in) = -(k4 \times MLSS \times V) \times U4 \times T$$

[in the expression, U4out is a persistent substance concentration in the effluent that flows out from the effluent treatment system, U4in is a persistent substance concentration in the effluent that flows into the effluent treatment system, MLSS is a sludge concentration, V is a tank volume, U4 is a persistent substance concentration in the effluent, T is a residence time, and k4 is a persistent substance decomposition reaction factor].

12. The information processing method according to any one of claims 1 to 11, comprising
specifying an operating condition in the effluent treatment system in which a trait in each of a plurality of the trait models satisfies a predetermined condition on the basis of the plurality of trait models.

13. An information processing device, comprising
a generation unit generating a trait model indicating a trait of an effluent treatment system, on the basis of effluent information including information of an effluent in the effluent treatment system using an activated sludge method and bacteria added to the effluent, and sludge information of sludge in the effluent treatment system.

14. A program for causing a computer to execute processing of
generating a trait model indicating a trait of an effluent treatment system, on the basis of effluent information including information of an effluent in the effluent treatment system using an activated sludge method and bacteria added to the effluent, and sludge information of sludge in the effluent treatment system.

15. A program for causing a computer to execute processing of:

acquiring effluent information including information of an effluent in an effluent treatment system using an activated sludge method and bacteria added to the effluent, and sludge information of sludge in the effluent treatment system; and
outputting a parameter of a trait model indicating a trait of the effluent treatment system by inputting the acquired effluent information and sludge information to an estimation model for outputting a parameter of a trait model indicating a trait of an effluent treatment system when effluent information and sludge information in the effluent treatment system are input.

16. The program according to claim 15, comprising
specifying an operating condition in the effluent treatment system, on the basis of the trait model to which the output parameter is applied.

17. The program according to any one of claim 15 or 16,

wherein the parameter includes a sludge conversion rate representing an amount of excess sludge generated with respect to an amount of organic pollution materials treated by the effluent treatment system, and a sludge decomposition rate representing an effect by the addition of sludge decomposition bacteria, and
the trait model is represented by an expression described below,

[Expression 5]

$$\Delta MLSS \times V = a\Delta C - B \times MLSS \times V$$

[in the expression, MLSS is a sludge concentration, V is a tank volume, $\Delta C$ is an amount of treated carbon, a is the sludge conversion rate, and B is the sludge decomposition rate].

18. The program according to any one of claims 15 to 17, comprising

acquiring a used amount of the bacteria in the effluent treatment system, and
outputting usage information relevant to the used amount of the bacteria when the acquired used amount of the bacteria is greater than or equal to a predetermined value.

19. An information processing method for causing a computer to execute processing of:

acquiring effluent information including information of an effluent in an effluent treatment system using an activated sludge method and bacteria added to the effluent, and sludge information of sludge in the effluent treatment system; and
outputting a parameter of a trait model indicating a trait of the effluent treatment system by inputting the acquired effluent information and sludge information to an estimation model for outputting a parameter of a trait model indicating a trait of an effluent treatment system when effluent information and sludge information in the effluent treatment system are input.

20. An information processing device, comprising:

an acquisition unit acquiring effluent information including information of an effluent in an effluent treatment system using an activated sludge method and bacteria added to the effluent, and sludge information of sludge in the effluent treatment system; and

an output unit outputting a parameter of a trait model indicating a trait of the effluent treatment system by inputting the acquired effluent information and sludge information to an estimation model for outputting a parameter of a trait model indicating a trait of an effluent treatment system when effluent information and sludge information in the effluent treatment system are input.

21. An effluent treatment system, comprising:

an effluent treatment device executing an effluent treatment using an activated sludge method; and
an information processing terminal controlling the effluent treatment device,
wherein the information processing terminal
outputs effluent information including information of an effluent in the effluent treatment system and bacteria added to the effluent, and sludge information of sludge in the effluent treatment system,
acquires an operating condition in the effluent treatment system according to the output effluent information and sludge information, and
outputs control information based on the acquired operating condition to the effluent treatment device, and
the effluent treatment device
executes the effluent treatment in accordance with the control information output from the information processing terminal.

# FIG.1

# FIG.2

100

**Information Processing Device** 1

Control Unit 11

Storage Unit 12

Program 1P

Trait Model 121

Effluent Treatment System DB 122

Effluent/Sludge Information DB 123

Communication Unit 13

Display Unit 14

Manipulation Unit 15

1A

Effluent Treatment System 200

Effluent Treatment System 200

N

Effluent Treatment System 200

**Information Processing Terminal** 2

Control Unit 21

Communication Unit 23

Display Unit 24

Manipulation Unit 25

Input/Output Unit 26

Storage Unit 22

Program 2P

Effluent Treatment Device 3

2A

# FIG.3

EP 4 485 334 A1

~122

| Effluent treatment system ID | User ID | Effluent type | Effluent information ID | Sludge information ID | Trait model information |
|---|---|---|---|---|---|
| x1 | y1 | Chemical plant | d1 | s1 | $\Delta MLSS \times V = a\,\Delta C - B \times MLSS \times V$  a:**、B:** |
| x2 | y2 | Food factory | d2 | s2 | ... |
| ... | ... | ... | ... | ... | ... |

| Operating condition information | Management information |
|---|---|
| Bacteria type:sludge decomposition bacteria X1、 Added amount:5〜6、 TOC:800〜900… | Stock bacteria amount:**mL、 Next order date:Month○Day○、 Next order quantity:**mL |
| ... | ... |
| ... | ... |

## FIG.4

123

| Effluent information ID | Effluent information | | | | | | | | | | | |
| --- | --- | --- | --- | --- | --- | --- | --- | --- | --- | --- | --- | --- |
| | Collection date | Flow rate [m3/d] | BOD [ppm] | TOC [ppm] | TN [ppm] | TP [ppm] | SS [ppm] | Liquid specific gravity [kg/L] | SS density [kg/L] | Odor substance concentration [ppm] | Persistent substance concentration [ppm] | Other components [ppm] |
| d1 | 2021/2/24 | 204 | 960 | 282 | – | – | – | – | – | – | – | – |
| d2 | 2021/5/10 | – | – | – | 24.7 | *** | *** | – | – | – | – | *** |
| ... | ... | ... | ... | ... | ... | ... | ... | ... | ... | ... | ... | ... |

| Sludge information ID | Sludge information | | | | | | | | | | |
| --- | --- | --- | --- | --- | --- | --- | --- | --- | --- | --- | --- |
| | Collection date | MLSS [ppm] | Killed bacteria rate [%] | Bacterial flora [–] | SV [%] | SVI [mL/g –MLSS] | Filamentous bacteria content [–] | Flock size [–] | Protozoan type/ number [–] | Organic compound /inorganic compound ratio [–] | Sugars/ protein content [–] |
| s1 | 2021/2/24 | *** | – | – | – | – | – | – | – | – | – |
| s2 | 2021/5/10 | *** | *** | *** | *** | *** | *** | *** | *** | *** | *** |
| ... | ... | ... | ... | ... | ... | ... | ... | ... | ... | ... | ... |

EP 4 485 334 A1

## FIG.5

# FIG.6

Information processing terminal       Information processing device

( Start )

S101
Transmit the information of the effluent treatment system

S102
Receive the information of the effluent treatment system

S103
Acquire the effluent information

S104
Acquire the setting of the sludge information

S105
Acquire the actual measurement data

S106
Calculate the parameter

S107
Generate the trait model

S108
Specify the sludge load

S109
Specify the operating condition

S110
Store in DB

S112
Receive the screen including the trait graph and the operating condition

S111
Output the screen including the trait graph and the operating condition

S113
Display the screen

S114
Output the control information

( End )

# FIG.7

EP 4 485 334 A1

<u>Optimal operating conditions for the effluent treatment system of XX</u>　　　Date of proposal: Year○ month○ day○

By increasing the MLSS of the treatment tank to 9000-1000 ppm,
the amount of excess sludge generated will be reduced.

241

| | | | Set value | | | | |
|---|---|---|---|---|---|---|---|
| Manipulation variable | Bacteria added | Type | Sludge decomposition bacteria A | | | | |
| Manipulation variable | | Amount | 5 | ~ | 6 | mL/min | |
| Manipulation variable | Inflow effluent | Flow rate | 8.3 | ~ | 10 | m³/hr | |
| Manipulation variable | | TOC | 800 | ~ | 900 | ppm | |
| Target value | Treatment tank | MLSS | 9000 | ~ | 10000 | ppm | ※Conventional value 4000 |
| Manipulation variable | | Air flow rate | 1300 | ± | 200 | m³/hr | ※ |
| Manipulation variable | Settlement tank after treatment | Return flow rate | 11 | ~ | 13 | m³/hr | ※Conventional value 7 |
| Manipulation variable | | Interface position | 0.5 | ~ | 0.75 | m | ※Conventional value less than 0.25 |
| Manipulation variable | | Extraction amount | 1.5 | ~ | 2 | m³/D | ※Conventional value 3.4 |

※Denotes changes

Sludge extraction rate

242

$\Delta MLSS \times V = a\Delta C - B \times MLSS \times V$
$a = **、 B = **$

Load per sludge

243

(Current data)
Effluent information
　Flow rate：204 m³/D
　BOD：960 ppm、 TOC：282 ppm
Sludge information
　MLSS：4000 ppm

FIG.8

# FIG.9

Information processing terminal | Information processing device

```
( Start )
```

S101
Transmit the information of the effluent treatment system

S102
Receive the information of the effluent treatment system

S103
Acquire the effluent information

S104
Acquire the setting of the sludge information

S105
Acquire the actual measurement data

S106
Calculate the parameter

S107
Generate the trait model

S201
Specify the amount of effective bacteria

S109
Specify the operating condition

S110
Store in DB

S112
Receive the screen including the trait graph and the operating condition

S111
Output the screen including the trait graph and the operating condition

S113
Display the screen

S114
Output the control information

```
( End )
```

FIG.10

## FIG.11

**Information processing terminal**      **Information processing device**

( Start )

S101
Transmit the information of the effluent treatment system

S102
Receive the information of the effluent treatment system

S103
Acquire the effluent information

S104
Acquire the setting of the sludge information

S105
Acquire the actual measurement data

S106
Calculate the parameter

S107
Generate the trait model

S301
Specify the load

S109
Specify the operating condition

S110
Store in DB

S112
Receive the screen including the trait graph and the operating condition

S111
Output the screen including the trait graph and the operating condition

S113
Display the screen

S114
Output the control information

( End )

FIG.12

Persistent substance
decomposition rate

Persistent substance
decomposition bacteria
added

No persistent substance
decomposition bacteria
added

Load per sludge

# FIG.13

Information processing terminal                    Information processing device

( Start )

S101
Transmit the information of the
effluent treatment system

S102
Receive the information of the
effluent treatment system

S103
Acquire the effluent
information

S104
Acquire the setting of the
sludge information

S105
Acquire the actual
measurement data

S106
Calculate the parameter

S107
Generate the trait model

S401
Specify the load

S109
Specify the operating condition

S110
Store in DB

S112
Receive the screen including
the trait graph and the
operating condition

S111
Output the screen including
the trait graph and the
operating condition

S113
Display the screen

S114
Output the control information

( End )

FIG.14

FIG.15

```
┌─────────────────────────────┐
│ Effluent information        │                                              124
│   TN:**                     │                                         ┌─────────────────┐
│   TP:**                     │                                         │                 │
│        :                    │──────────────────────────────▶         │ Estimation Model│────────▶  Parameter
│                             │                                         │                 │           a:***、B:***
│ Sludge Information          │                                         └─────────────────┘
│   Killed bacteria rate:**   │
│   SV:**                     │
│   SVI:**                    │
│        :                    │
└─────────────────────────────┘
```

## FIG.16

Information processing terminal | Information processing device

```
        ( Start )
           |
           | S501
Transmit the information of the
effluent treatment system, the
effluent information, the sludge
         information
```

S502
Receive the information of the
effluent treatment system, the
effluent information, the sludge
information

S503
Select estimation model

S504
Input the effluent information
and sludge information to the
estimation model

S505
Acquire the parameter output
from the estimation model

S506
Generate the trait model

S507
Specify the sludge load

S508
Specify the operating condition

S509
Store in DB

to S111

# FIG.17

Information processing terminal      Information processing device

```
        ( Start )
              │            S601                        S602
┌──────────────────────────┐        ┌──────────────────────────┐
│ Transmit the usage status of │ - - -> │ Receive the usage status of │
│       the bacteria        │        │       the bacteria        │
└──────────────────────────┘        └──────────────────────────┘
                                                 │        S603
                                            ◇ Above a ◇           NO
                                            ◇ predetermined ◇ ─────┐
                                            ◇ value? ◇             │
                          S605             │ YES    S604           │
┌──────────────────────────┐        ┌──────────────────────────┐  │
│     Receive the usage     │ <- - - │  Transmit usage information │  │
│       information         │        └──────────────────────────┘  │
└──────────────────────────┘                 │ <──────────────────┘
              │            S606
┌──────────────────────────┐
│     Display the usage     │
│       information         │                          S607
└──────────────────────────┘        ┌──────────────────────────┐
                                    │    Specify the order       │
                                    │      information           │
                          S609      └──────────────────────────┘
┌──────────────────────────┐                 │            S608
│     Receive the order     │ <- - - ┌──────────────────────────┐
│       information         │        │    Transmit the order      │
└──────────────────────────┘        │      information           │
              │            S610      └──────────────────────────┘
┌──────────────────────────┐
│     Display the order     │
│       information         │
└──────────────────────────┘
         ( End )
```

<div align="center">

**INTERNATIONAL SEARCH REPORT**

</div>

| International application No. |
|---|
| **PCT/JP2023/006508** |

**A.    CLASSIFICATION OF SUBJECT MATTER**

*G06Q 50/04*(2012.01)i; *C02F 3/12*(2023.01)i; *G06Q 10/04*(2023.01)i
FI:    C02F3/12 H; C02F3/12 B; C02F3/12 U; G06Q10/04; G06Q50/04

According to International Patent Classification (IPC) or to both national classification and IPC

**B.    FIELDS SEARCHED**

Minimum documentation searched (classification system followed by classification symbols)

C02F3/12; C02F3/00; C02F3/02-3/10; G06Q10/04; G06Q50/04; G16Z99/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2007-229550 A (KABUSHIKI KAISHA TOSHIBA) 13 September 2007 (2007-09-13) claims, paragraphs [0019]-[0137] | 1-21 |
| X | JP 2001-334253 A (KABUSHIKI KAISHA TOSHIBA) 04 December 2001 (2001-12-04) claims, paragraphs [0002]-[0007], [0018]-[0078] | 1-21 |
| X | JP 2005-34717 A (HITACHI, LTD.) 10 February 2005 (2005-02-10) claims, paragraphs [0015]-[0084] | 1-21 |
| X | JP 2002-331283 A (YASKAWA ELECTRIC MFG. CO., LTD.) 19 November 2002 (2002-11-19) claims, paragraphs [0002]-[0012] | 1-21 |
| X | JP 2001-252691 A (KABUSHIKI KAISHA TOSHIBA) 18 September 2001 (2001-09-18) claims, paragraphs [0014]-[0079] | 1-21 |

☐ Further documents are listed in the continuation of Box C.          ☑ See patent family annex.

| | |
|---|---|
| *    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **28 April 2023** | **16 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/006508**

| Patent document cited in search report | | | Publication date (day/month/year) | Patent family member(s) | | | Publication date (day/month/year) |
|---|---|---|---|---|---|---|---|
| JP | 2007-229550 | A | 13 September 2007 | (Family: none) | | | |
| JP | 2001-334253 | A | 04 December 2001 | (Family: none) | | | |
| JP | 2005-34717 | A | 10 February 2005 | KR | 10-0633831 | B1 | |
| | | | | CN | 1576245 | A | |
| | | | | TW | 200505803 | A | |
| | | | | KR | 10-2005-0009678 | A | |
| JP | 2002-331283 | A | 19 November 2002 | (Family: none) | | | |
| JP | 2001-252691 | A | 18 September 2001 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018103113 A